(19) Europäisches Patentamt / European Patent Office / Office européen des brevets

(11) EP 4 580 285 A1

(12) EUROPEAN PATENT APPLICATION
published in accordance with Art. 153(4) EPC

(43) Date of publication:
02.07.2025 Bulletin 2025/27

(51) International Patent Classification (IPC):
H04W 72/0446 (2023.01)

(21) Application number: 23884509.3

(22) Date of filing: 25.09.2023

(52) Cooperative Patent Classification (CPC):
H04W 52/02; H04W 72/0446; H04W 72/0453;
H04W 72/21; H04W 72/23; H04W 72/541

(86) International application number:
PCT/CN2023/121234

(87) International publication number:
WO 2024/093577 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.11.2022 CN 202211354633

(71) Applicant: Huawei Technologies Co., Ltd.
Shenzhen, Guangdong 518129 (CN)

(72) Inventors:
• CAO, Youlong
  Shenzhen, Guangdong 518129 (CN)
• QIN, Yi
  Shenzhen, Guangdong 518129 (CN)
• CHEN, Erkai
  Shenzhen, Guangdong 518129 (CN)
• XU, Rui
  Shenzhen, Guangdong 518129 (CN)

(74) Representative: Thun, Clemens
Mitscherlich PartmbB
Patent- und Rechtsanwälte
Karlstraße 7
80333 München (DE)

(54) DATA TRANSMISSION METHOD AND APPARATUS

(57) A data transmission method and an apparatus are provided. In the data transmission method, a terminal device receives first information from a network device, determines a plurality of candidate resources based on the first information, determines a target resource from the plurality of candidate resources based on a first data amount of to-be-sent data, sends a part or all of the to-be-sent data to the network device on the target resource, and sends second information to the network device, where the second information indicates the target resource. It can be learned that the target resource is determined by the terminal device from the plurality of candidate resources based on an actual amount of to-be-sent data, and an amount of data that can be transmitted on the plurality of candidate resources can cover an amount of data that the terminal device transmits with a high probability. This helps increase a probability of completing data transmission within a range of the plurality of candidate resources, and reduce a data transmission delay.

FIG. 9

## Description

This application claims priority to Chinese Patent Application No. 202211354633.3, filed with the China National Intellectual Property Administration on November 1, 2022 and entitled "DATA TRANSMISSION METHOD AND APPARATUS", which is incorporated herein by reference in its entirety.

## TECHNICAL FIELD

This application relates to the field of communication technologies, and in particular, to a data transmission method and an apparatus.

## BACKGROUND

A multi-modal service is a service for which a tactile experience dimension is added on the basis of extended reality (extended reality, XR), and can implement remote touch and remote management, including remote sensing in a plurality of aspects such as vision, hearing, tactile sensation, and kinesthesis.
A tactile sensor in the multi-modal service may periodically generate data. A network device configures a periodic resource for a terminal device in a configured grant (configured grant, CG) manner, so that the terminal device sends the data generated by the tactile sensor to the network device on the configured resource.
However, there may be a plurality of tactile sensors, and it takes the terminal device different time to encode data generated by each tactile sensor. Therefore, encoded data sent by the terminal device at different time may be from different numbers of tactile sensors. In other words, the terminal device may send different amounts of data to the network device at different time. However, resources in each periodicity that are configured based on a CG are fixed. If the terminal device needs to send a large amount of data to the network device, resources in one periodicity that are configured based on the CG may be insufficient to transmit the large amount of data, and the terminal device needs to wait for resources configured in a next periodicity. Consequently, a delay of sending data by the terminal device to the network device is large.

## SUMMARY

Embodiments of this application provide a data transmission method and an apparatus, to reduce a delay of sending data by a terminal device to a network device.
According to a first aspect, this application provides a data transmission method. The method may be applied to a terminal device, or may be applied to a chip in a terminal device, or may be applied to a logical module or software that can implement all or some functions of a terminal device. The following uses a terminal device as an example for description. The method includes: The terminal device receives first information from a network device, determines a plurality of candidate resources based on the first information, determines a target resource from the plurality of candidate resources based on a first data amount of to-be-sent data, sends a part or all of the to-be-sent data to the network device on the target resource, and sends second information to the network device, where the second information indicates the target resource.
It can be learned that the target resource used to send the data is determined by the terminal device from the plurality of candidate resources based on the actual amount of the to-be-sent data, and an amount of data that can be transmitted on the plurality of candidate resources can cover an amount of data that the terminal device highly probably transmits. This helps increase a probability that the terminal device completes transmission of the to-be-sent data within a range of the plurality of candidate resources, and reduce a data transmission delay. In addition, the operation that the terminal device sends second information to the network device further helps the network device determine a resource used to receive the data from the terminal device. Compared with that the network device determines, in a blind detection manner, the resource used to receive the data, this helps reduce power consumption of the network device for receiving the data.
In an optional implementation, the plurality of candidate resources are frequency domain resources, time domain resources, or time-frequency domain resources.
In an optional implementation, at least two of the plurality of candidate resources overlap. In this implementation, in a scenario in which the network device separately configures candidate resources for a plurality of terminal devices, the candidate resources configured for the terminal devices may be different or not completely the same. This helps reduce interference caused by sending data by another terminal device to sending data by the terminal device, and improves resource utilization.
In an optional implementation, a proportion of an overlapping part between the at least two candidate resources in one of the at least two candidate resources is greater than a first threshold.
In an optional implementation, the plurality of candidate resources do not overlap each other. This implementation helps increase a total amount of data that can be transmitted on the plurality of candidate resources, and further can increase an amount of data that can be transmitted by the terminal device within the range of the plurality of candidate resources, helps increase a probability that a large amount of data can be transmitted within the range of the plurality of candidate resources, and helps reduce a delay of sending the to-be-sent data by the terminal device.

In an optional implementation, the plurality of candidate resources are frequency domain resources or time-frequency domain resources; and that the terminal device sends second information to the network device includes: The terminal device sends a demodulation reference signal (demodulation reference signal, DMRS) to the network device, where the second information is carried in a frequency domain position of the DMRS. This implementation helps the network device determine a frequency domain position of the target resource by detecting the frequency domain position of the DMRS, and helps reduce the power consumption of the network device for receiving the data.

In an optional implementation, the second information is carried in uplink control information (uplink control information, UCI). In other words, the terminal device may notify the network device of the target resource by using the UCI. This helps the network device learn of the target resource, and reduce the power consumption of the network device for receiving the data.

In an optional implementation, the second information indicates an index of the target resource; or the second information indicates a proportion of the target resource in the plurality of candidate resources. This implementation helps the network device determine the target resource based on the index of the target resource or the proportion of the target resource in the plurality of candidate resources, and then, the network device can receive the data from the terminal device on the target resource. This helps reduce the power consumption of the network device for receiving the data.

According to a second aspect, this application provides a data transmission method. The method may be applied to a network device, or may be applied to a chip in a network device, or may be applied to a logical module or software that can implement all or some functions of a network device. The following uses a network device as an example for description. The method includes: The network device sends first information to a terminal device, where the first information is used to determine a plurality of candidate resources, receives second information from the terminal device, where the second information indicates a target resource, and the target resource belongs to the plurality of candidate resources, and receives data from the terminal device on the target resource.

It can be learned that the target resource used to receive the data belongs to the plurality of candidate resources configured by the network device for the terminal device, and an amount of data that can be transmitted on the plurality of candidate resources can cover an amount of data that the terminal device highly probably transmits. This helps increase a probability that the terminal device completes transmission of the to-be-sent data within a range of the plurality of candidate resources, and reduce a data transmission delay. In addition, the network device may further determine, by using the second information from the terminal device, a resource used to receive the data from the terminal device. Compared with that the network device determines, in a blind detection manner, the resource used to receive the data, this helps reduce power consumption of the network device for receiving the data.

In an optional implementation, the plurality of candidate resources are frequency domain resources, time domain resources, or time-frequency domain resources.

In an optional implementation, at least two of the plurality of candidate resources overlap. In this implementation, in a scenario in which the network device separately configures candidate resources for a plurality of terminal devices, the candidate resources configured for the terminal devices may be different or not completely the same. This helps reduce interference generated because different terminal devices send data, and improves resource utilization.

In an optional implementation, a proportion of an overlapping part between the at least two candidate resources in one of the at least two candidate resources is greater than a first threshold.

In an optional implementation, the plurality of candidate resources do not overlap each other. This implementation helps increase a total amount of data that can be transmitted on the plurality of candidate resources, and further can increase an amount of data that can be transmitted by the terminal device within the range of the plurality of candidate resources, helps increase a probability that a large amount of data can be transmitted within the range of the plurality of candidate resources, and helps reduce a delay of sending the to-be-sent data by the terminal device.

In an optional implementation, the plurality of candidate resources are frequency domain resources or time-frequency domain resources; and that the network device receives second information from the terminal device includes: The network device receives a DMRS from the terminal device, where the second information is carried in a frequency domain position of the DMRS. In this implementation, the network device may determine a frequency domain position of the target resource by detecting the frequency domain position of the DMRS, and helps reduce the power consumption of the network device for receiving the data.

In an optional implementation, the second information is carried in UCI. In other words, the network device may learn of the target resource by using the UCI. This helps reduce the power consumption of the network device for receiving the data.

In an optional implementation, the second information indicates an index of the target resource; or the second information indicates a proportion of the target resource in the plurality of candidate resources. In this implementation, the network device may determine the target resource based on the index of the target resource or the proportion of the target resource in the plurality of candidate resources, and then, the network device receives the data from the terminal device on the target resource. This helps reduce the power consumption of the network device for receiving the data.

According to a third aspect, this application further provides a communication apparatus. The communication apparatus may be a network device or a terminal device, or may be a chip in a network device or a terminal device, or may be a logical module or software that can implement all or some functions of a network device or a terminal device. The communication apparatus has a function of implementing some or all of the implementations of the first aspect, or has a function of implementing some or all of the implementations of the second aspect. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit. The processing unit is configured to control the communication unit to perform data/signaling receiving and sending.

The communication unit is configured to receive first information from a network device. The processing unit is configured to determine a plurality of candidate resources based on the first information. The processing unit is further configured to determine a target resource from the plurality of candidate resources based on a first data amount of to-be-sent data. The communication unit is further configured to send a part or all of the to-be-sent data to the network device on the target resource. The communication unit is further configured to send second information to the network device, where the second information indicates the target resource.

In addition, for another optional implementation of the communication apparatus in this aspect, refer to related content of the first aspect. Details are not described herein again.

In another implementation, the communication apparatus includes a communication unit.

The communication unit is configured to send first information to a terminal device, where the first information is used to determine a plurality of candidate resources. The communication unit is further configured to receive second information from the terminal device, where the second information indicates a target resource, and the target resource belongs to the plurality of candidate resources. The communication unit is further configured to receive data from the terminal device on the target resource.

In addition, for another optional implementation of the communication apparatus in this aspect, refer to related content of the second aspect. Details are not described herein again.

For example, the communication unit may be a transceiver or a communication interface, the storage unit may be a memory, and the processing unit may be a processor. The processor is coupled to the memory. The memory is configured to store a program or an instruction. The processor may be configured to enable, when the program or instructions are executed by the processor, the communication apparatus to perform the method according to the first aspect or the second aspect. The transceiver or the communication interface may be configured to receive and send signals and/or data.

In an implementation, the communication apparatus includes a processor and a transceiver. The transceiver is configured to receive first information from a network device. The processor is configured to determine a plurality of candidate resources based on the first information. The processor is further configured to determine a target resource from the plurality of candidate resources based on a first data amount of to-be-sent data. The transceiver is further configured to send a part or all of the to-be-sent data to the network device on the target resource. The transceiver is further configured to send second information to the network device, where the second information indicates the target resource.

In addition, for another optional implementation of the communication apparatus in this aspect, refer to related content of the first aspect. Details are not described herein again.

In another implementation, the communication apparatus includes a transceiver. The transceiver is configured to send first information to a terminal device, where the first information is used to determine a plurality of candidate resources. The transceiver is further configured to receive second information from the terminal device, where the second information indicates a target resource, and the target resource belongs to the plurality of candidate resources. The transceiver is further configured to receive data from the terminal device on the target resource.

In addition, for another optional implementation of the communication apparatus in this aspect, refer to related content of the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of integrated circuit technologies, increasingly more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (System-on-a-Chip, SoC). Whether the components are separately disposed on different chips or integrated and disposed on one or more chips usually depends on a requirement of a product design. This embodiment of this application imposes no limitation on specific implementations of the foregoing components.

According to a fourth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal, and then a processed signal arrives at the transceiver (or the communication interface). Similarly, when the processor receives the foregoing input signal, the transceiver (or the communication interface) receives the signal, and inputs the signal into the processor. Further, after the transceiver (or the communication interface) receives the signal, other processing may further need to be performed on the signal, and then a processed signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner in which the memory and the processor are disposed are not limited in embodiments of this application.

According to a fifth aspect, this application further provides a communication system. The system includes at least one terminal device and at least one network device in the foregoing aspects. In another possible design, the system may further include another device that interacts with the terminal device and/or the network device in the solutions provided in this application.

According to a sixth aspect, this application provides a computer-readable storage medium. The computer-readable storage medium stores a computer program. When the computer program is run, the method according to any one of the first aspect or the second aspect is performed.

According to a seventh aspect, this application further provides a computer program product including instructions. The computer program product includes computer program code. When the computer program code is run, the method according to any one of the first aspect or the second aspect is performed.

According to an eighth aspect, this application provides a chip system. The chip system includes a processor and an interface, the interface is configured to obtain a program or instructions, and the processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include a chip and another discrete device.

## BRIEF DESCRIPTION OF DRAWINGS

FIG. 1 is a diagram of a structure of a communication system according to an embodiment of this application;
FIG. 2 is a diagram of a multi-modal service according to an embodiment of this application;
FIG. 3 is a diagram of dynamic scheduling according to an embodiment of this application;
FIG. 4 is a diagram of a resource used to transmit a scheduling request (scheduling request, SR) according to an embodiment of this application;

FIG. 5 is a diagram of dynamic scheduling for a logical channel (logical channel, LCH) y according to an embodiment of this application;

FIG. 6 is a diagram of a procedure of a type-1 CG according to an embodiment of this application;

FIG. 7 is a diagram of a procedure of a type-2 CG according to an embodiment of this application;

FIG. 8 is a diagram of a CG resource according to an embodiment of this application;

FIG. 9 is a schematic flowchart of a data transmission method according to an embodiment of this application;

FIG. 10 is a diagram of resource distribution according to an embodiment of this application;

FIG. 11 is a diagram of candidate resources according to an embodiment of this application;

FIG. 12 is a diagram of other candidate resources according to an embodiment of this application;

FIG. 13 is a diagram of still other candidate resources according to an embodiment of this application;

FIG. 14 is a diagram of yet other candidate resources according to an embodiment of this application;

FIG. 15 is a diagram of still yet other candidate resources according to an embodiment of this application;

FIG. 16 is a diagram of a structure of a communication apparatus according to an embodiment of this application;

FIG. 17 is a diagram of a structure of another communication apparatus according to an embodiment of this application; and

FIG. 18 is a diagram of a structure of a chip according to an embodiment of this application.

## DESCRIPTION OF EMBODIMENTS

The following describes embodiments of this application with reference to the accompanying drawings in embodiments of this application.

To better understand a data transmission method disclosed in embodiments of this application, a communication system to which embodiments of this application are applicable is first described.

Technical solutions in embodiments of this application are applied to various communication systems, for example, a global system for mobile communications, a long term evolution (long term evolution, LTE) system, a universal mobile telecommunications system, a 4th generation (4th generation, 4G) mobile communication technology system, a next-generation radio access network (next-generation radio access network, NG-RAN), a new radio technology (new radio, NR) system, and a 5th generation mobile communication technology (5th generation mobile networks, 5G) system. With continuous development of communication technologies, the technical solutions in embodiments of this application may be further applied to a subsequent evolved communication system, such as a 6th generation mobile communication technology (6th generation mobile networks, 6G) system or 7th generation mobile communication technology (7th generation mobile networks, 7G) system.

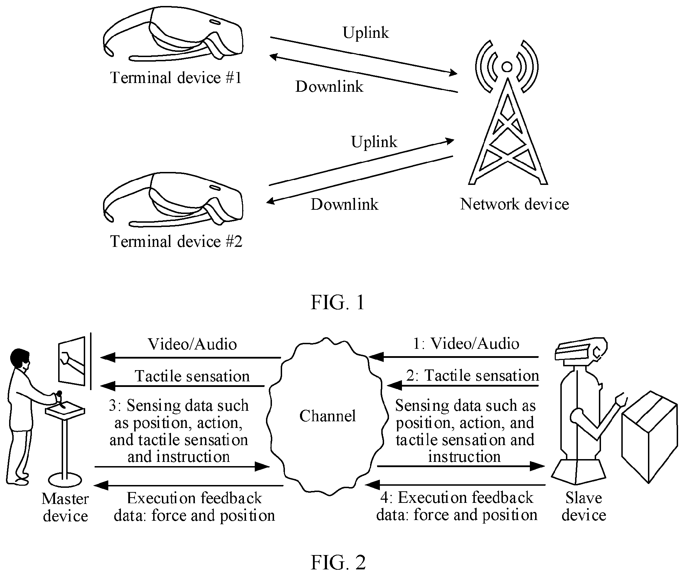

FIG. 1 is a diagram of a structure of a communication system according to an embodiment of this application. The communication system may include but is not limited to one network device and one terminal device. Uplink transmission or downlink transmission may be performed between the network device and the terminal device. In addition, the communication system may further include a channel for data/signal transmission between the network device and the terminal device, for example, a transmission medium like an optical fiber, a cable, or an atmosphere. Numbers and forms of devices shown in FIG. 1 are used as examples and do not constitute limitations on embodiments of this application. During actual application, two or more network devices and two or more terminal devices may be included. The communication system shown in FIG. 1 is described by using one network device and two terminal devices (to be specific, a terminal device #1 and a terminal device #2 in FIG. 1) as an example. An example in which the network device in FIG. 1 is a base station and the terminal devices are virtual reality (virtual reality, VR) glasses is used.

In embodiments of this application, the network device may be a device having a wireless transceiver function, or may be a chip disposed on a device having a wireless transceiver function. The network device includes but is not limited to: an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP or transmission point, TP), or the like. The network device may alternatively be a device used in a 4G, 5G, or even 6G system, for example, an evolved NodeB (NodeB, eNB, or e-NodeB, evolutional NodeB) in LTE, a next-generation LTE base station (next-generation eNodeB, ng-eNB), a next-generation base station (next-generation NodeB, gNodeB, or gNB), a transceiver point, or a transmission point (TRP or TP). The network device may alternatively be a network node that forms a gNB or a transmission point, for example, a baseband unit (BBU), a distributed unit (distributed unit, DU), a pico network device (Picocell), a femto network device (Femtocell), or a road side unit (road side unit, RSU) in an intelligent driving scenario. The base station may be: a macro base station, a micro base station, a pico base station, a small cell, a relay station, a balloon station, or the like. Alternatively, the network device may be a server, a wearable device, a vehicle-mounted device, or the like. It may be understood that all or some functions of the network device in this application may alternatively be implemented by using a software function running on hardware, or may be implemented by using an instantiated virtualization function on a platform (for example, a cloud platform).

In embodiments of this application, the terminal device may also be referred to as user equipment (user equipment, UE), a terminal, an access terminal, a subscriber unit, a subscriber station, a mobile station, a remote station, a remote terminal, a mobile device, a user terminal, a user agent, or a user apparatus, and can be used in a 4G system, a 5G system, a 6G system, or the like. The terminal device in embodiments of this application may be a joint device that performs digital signal transmission and receiving on a common telephone line, or may be a mobile phone (mobile phone), a tablet computer (Pad), a computer with a wireless transceiver function, a head mounted display (head mounted display, HMD), a VR terminal device (for example, VR glasses), an augmented reality (augmented reality, AR) terminal device (for example, AR glasses), a mixed reality (mixed reality, MR) terminal device, a wireless terminal in industrial control (industrial control), a tactile terminal device, a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an RSU of the foregoing wireless terminal type, a wearable terminal device, or the like.

For ease of understanding embodiments disclosed in this application, the following two points are described.

(1) In embodiments disclosed in this application, an NR network scenario in a wireless communication network is used as an example of scenarios for description. It should be noted that the solutions in embodiments disclosed in this application are applied to another wireless communication network, and a corresponding name may also be replaced with a name of a corresponding function in the another wireless communication network.

(2) In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Related concepts in embodiments of this application are then briefly described.

1. Extended reality (extended reality, XR)

The XR is a technology that can be for combining real and virtual environments, and the technology can be used for human-computer interaction. The XR may be applied to education, entertainment, military affairs, medical care, environmental protection, transportation, public health, and other fields closely related to production and life of people. The XR is a general term of various reality-related technologies, and may include VR, AR, and MR.

The VR is a technology for simulating sensory simulation of vision and audio in a real world to a user as much as possible by rendering visual and audio scenarios. For the VR, a user may be provided with a service by wearing a head mounted display (head mounted display, HMD) and a headset. A visual component simulated by the HMD can completely replace a field of view of the user, and the headset may provide accompanying audio for the user. In addition, in the VR, user head and action tracking may be further performed, to update simulated visual and audio content in a timely manner, so that visual and audio content experienced by the user can be consistent with the action of the user.

The AR is a technology for providing visual or auditory additional information or artificially generated content in a real environment sensed by the user. The user may directly sense the real environment, for example, perception, processing, or rendering is not performed on the real environment. The user may alternatively indirectly sense the real environment. For example, related information about the real environment may be transferred to the user via a sensor or the like, and further enhancement processing is performed.

The MR is a technology that can be for combining real and virtual worlds to create a new visual environment and in which a physical entity and a digital object coexist and interact with each other in real time to simulate a real object. The MR is an advanced form of the AR. One of implementations of the MR is inserting some virtual elements into a physical scene, to provide the user with immersive experience in which these virtual elements are a part of a real scene.

2. Multi-modal service

The multi-modal service is a service for which a tactile experience dimension is added on the basis of XR, and can implement remote touch and remote management, including remote sensing in a plurality of aspects such as vision, hearing, tactile sensation, and kinesthesis. The multi-modal service has great development space in industrial automation, healthcare, distance education, and other related fields, can provide a user with comprehensive interactive experience, and has a great application value and business potential.

For example, FIG. 2 shows synchronous transmission of a plurality of data flows in a multi-sensory control scenario in a multi-modal service. Both a master (master) device and a slave (slave) device in FIG. 2 are terminal devices. A channel (community channel, comm.Channel) may be implemented based on a communication network in the foregoing communication system. A network device in the communication network may be configured to forward and process data from the master device and the slave device, to implement communication between the master device and the slave device. In addition, the slave device may send, through the channel, data related to a video (Video) and audio (Audio) to the master device, or may send, through the channel, tactile data (or a tactile signal) obtained based on a tactile sensor to the master device. The tactile data (or the tactile signal) may be obtained by the slave device via the tactile sensor. For example, the tactile data (or the tactile signal) may be a collected surface texture (surface texture). The master device may send, through the channel, sensing data such as a position, an action, and tactile sensation and an instruction to the slave device. The slave device executes the instruction from the master device to obtain execution feedback data, and sends, through the channel, the execution feedback data to the master device. The execution feedback data may include data related to a force and the position.

3. Dynamic scheduling

In a 5G network, the dynamic scheduling means that a network device uses control information in each slot to indicate a terminal device to send data. In a manner of configuring, based on the dynamic scheduling, a resource used to transmit data, a size of the configured resource may be flexibly and quickly adjusted based on a service requirement. However, for each time of scheduling, related control signaling needs to be transmitted, and signaling overheads are high.

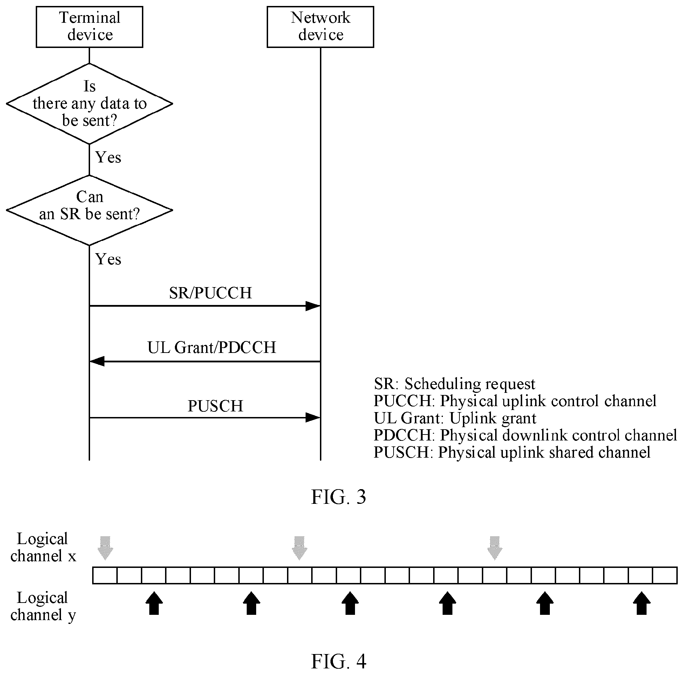

With reference to FIG. 3, in a scenario in which the terminal device is to perform uplink data transmission, when determining that an SR can be sent, the terminal device may send the SR to the network device on a physical uplink control channel (physical uplink control channel, PUCCH), to request an uplink grant (uplink grant, UL Grant) from the network device. In response to the received SR, the network device sends the uplink grant to the terminal device through a physical downlink control channel (physical downlink control channel, PDCCH). The uplink grant carries scheduling information, where the scheduling information indicates a physical uplink shared channel (physical uplink shared channel, PUSCH) configured by the network device for the terminal device. The terminal device may send data to the network device on the PUSCH indicated by the scheduling information. If receiving no uplink grant from the network device, the terminal device may send the SR to the network device again.

The SR may be used to notify the network device whether there is uplink data to be transmitted, but does not notify a specific amount of data to be transmitted. The SR occupies 1 bit (bit). In addition, a resource (including a periodicity, an offset, or the like) used to transmit the SR may vary with each LCH, and a resource used to transmit the SR may be separately configured for each logical channel. For example, with reference to FIG. 4, each small rectangle in FIG. 4 represents a resource of one slot. A resource pointed by a gray arrow is a resource that is configured for an LCH x and that is used to transmit the SR, and a resource pointed by a black arrow is a resource that is configured for an LCH y and that is used to transmit the SR. It can be learned that resources configured for the LCH x and the LCH y and that are used to transmit the SR are different.

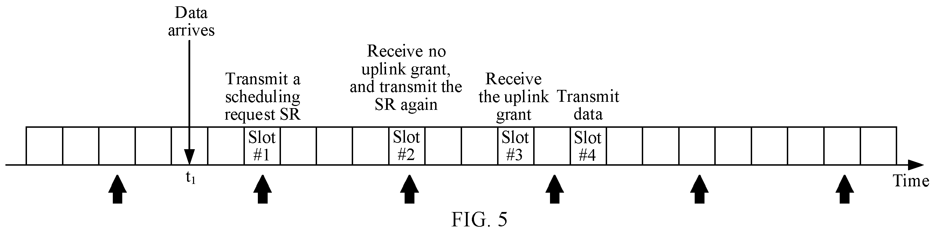

For example, data is transmitted on the LCH y in FIG. 4. With reference to FIG. 5, the terminal device obtains, at a moment $t_1$, data to be sent to the network device, sends an SR to the network device in a slot #1. The terminal device receives no UL grant from the network device until a slot #2. In this case, the terminal device sends the SR to the network device again in the slot #2. Then, the terminal device receives the UL grant from the network device in a slot #3, where scheduling information in the UL grant indicates that the network device configures, for the terminal device, a resource to be used by the terminal device to send the data in a slot #4. The terminal device sends the data to the network device on the configured resource in the slot #4.

In addition, the UL grant may indicate the scheduling information by using downlink control information (downlink control information, DCI) in a format (format) 0_0 or format 0_1. After receiving the SR, the network device may learn that the terminal device is to send the data to the network device, but does not know an amount of the data to be sent by the terminal device. In this case, the network device performs scheduling for the terminal device based on a small and fixed amount of data. In this way, an amount of data that can be transmitted on the resource indicated by the scheduling information is small and fixed.

In addition, the data sent by the terminal device to the network device on the PUSCH indicated by the scheduling information may further include a buffer status report (buffer status report, BSR). The BSR may be used to notify the network device of an amount of data that further needs to be sent by the terminal device to the network device. If the BSR received by the network device is greater than 0, the network device may continue to schedule a resource for the terminal device through the PDCCH that carries scheduling indication information, so that the terminal device can continue to send the data to the network device on the scheduled resource.

**EP 4 580 285 A1**

4. Configured grant (configured grant, CG)

The CG means that a network device allocates and specifies, by using radio resource control (radio resource control, RRC) signaling or a PDCCH, a resource for one time of uplink transmission and the network device and a terminal device may periodically reuse the resource to perform uplink transmission. The CG may be applied to uplink transmission of a service having a characteristic of periodic transmission. For example, the CG may be applied to uplink transmission of an XR service or a video service. In addition, a resource that is configured by using the CG and that is used for uplink transmission may also be referred to as a CG resource.

The CG includes a type (Type)-1 CG and a type-2 CG. In the type 1, a parameter related to the CG is configured by using RRC signaling, and the RRC is further used to activate the CG resource. In the type 2, a parameter related to the CG is configured by using RRC signaling, and the configured CG resource and an activated CG resource are indicated by using the PDCCH. The following describes the two types of CGs.

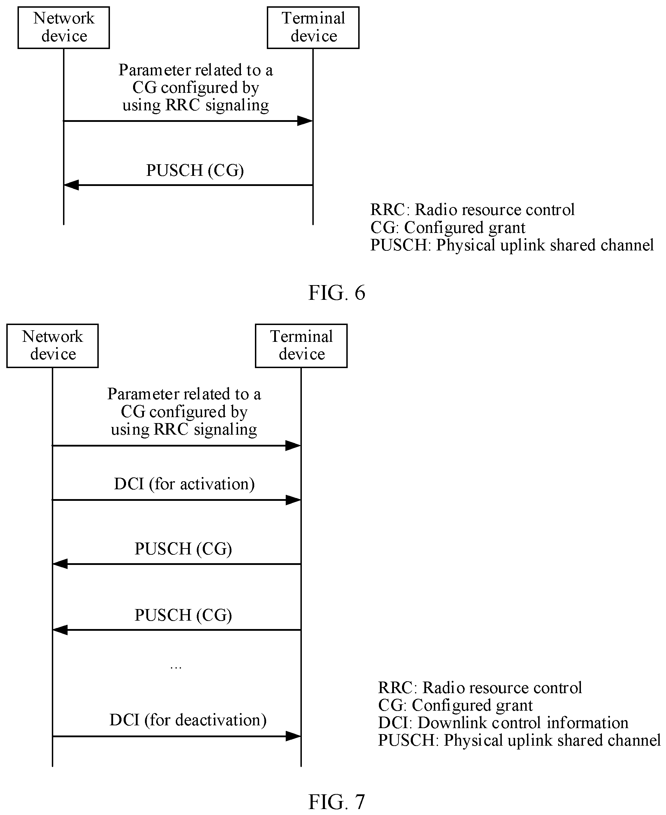

FIG. 6 shows a procedure of the type-1 CG. Specifically, the network device may include the parameter related to the CG in the RRC signaling. The parameter that is related to the CG and that is carried in the RRC signaling may include: a configured scheduling radio network temporary identifier (configured scheduling radio network temporary identifier, CS-RNTI), a CG periodicity, a frequency domain resource position, a hybrid automatic repeat request processes (hybrid automatic repeat request process, HARQ Process) number (HARQ Process Number) and an offset value, a specific value of a modulation and coding scheme (modulation and coding scheme, MCS), a number of repetitions, and the like. The terminal device may determine, based on received RRC signaling, a CG resource that periodically takes effect, and periodically send data to the network device on the CG resource.

FIG. 7 shows a procedure of the type-2 CG. Specifically, the network device may include, in the RRC signaling, the parameter related to the CG, including a CS-RNTI, a CG periodicity, and the like. When a plurality of CGs are configured, the RRC signaling may carry parameters respectively related to the plurality of CGs, and the plurality of CGs may correspond to different CG periodicities. The network device further sends a PDCCH, where the PDCCH carries DCI used to activate a CG resource, and the DCI indicates a frequency domain resource and an MCS in the activated CG resource. The terminal device determines a CG resource that periodically takes effect, and sends a PUSCH to the network device on the CG resource. If the CG resource needs to be deactivated (which may also be referred to as releasing the CG resource), the network device needs to send the PDCCH again, where the PDCCH carries DCI used to release the CG resource, the DCI indicates the CG resource that needs to be released, and a format of the DCI meets the following conditions:

(1) A CRC is scrambled by using the CS-RNTI provided in the RRC signaling; (2) a HARQ process number is all set to '0', where when a plurality of CGs are configured, the HARQ process number is not all set to '0', but indicates a HARQ process number corresponding to the activated CG resource; (3) a new data indicator (new data indicator, NDI) is all set to '0'; (4) a redundancy version (redundancy version, RV) is all set to '0'; (5) an MCS is all set to '1'; and (6) a frequency domain resource allocation (frequency domain resource allocation, FDRA) is all set to '1' (all set to '0' in a special scenario).

Data sent by the terminal device to the network device is encoded data. For example, in a multi-modal service, there may be a plurality of tactile sensors. Each tactile sensor may periodically generate data (or a signal). Periodicities in which different tactile sensors generate data may be different. For example, 500 to 2000 data packets are generated per second, and a size of each data packet is 12 to 48 bytes. In addition, duration for encoding the data generated by the tactile sensors may not be fixed, so that data generated by each tactile sensor arrives at the terminal device randomly, and a time interval between two adjacent arrivals complies with generalized Pareto distribution. Therefore, amounts of data that arrives at the terminal device at different moments may be different, and therefore, amounts of data sent by the terminal device to the network device at different moments may be different. For example, at a moment $t_1$, data of three tactile sensors arrives at the terminal device, and an amount of data sent by the terminal device to the network device is an amount of data generated by the three tactile sensors. At a moment $t_2$ data of four tactile sensors arrives at the terminal device, and an amount of data sent by the terminal device to the network device is an amount of data generated by the four tactile sensors.

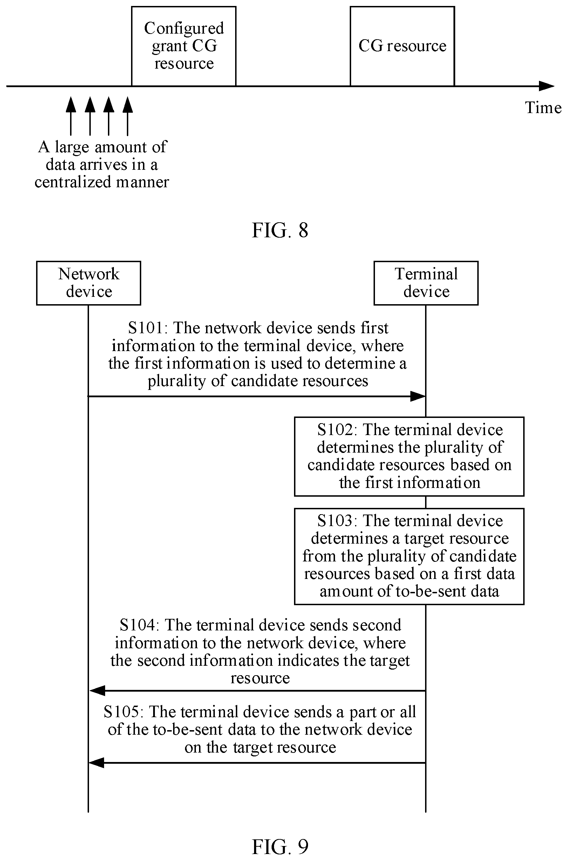

A resource configured by the network device for the terminal device in a CG manner is periodic, and a resource in each periodicity is fixed. With reference to FIG. 8, if a large amount of data arrives at the terminal device in a centralized manner, in other words, an amount of data to be sent by the terminal device to the network device is large, a resource, in a periodicity, that is configured based on the CG in a periodicity may be insufficient to transmit the large amount of data, and the terminal device needs to wait for a resource configured in a next periodicity. Consequently, a delay of sending data by the terminal device to the network device is large.

Embodiments of this application provide a data transmission method. In the method, a terminal device receives first information from a network device, determines a plurality of candidate resources based on the first information, determines a target resource from the plurality of candidate resources based on a first data amount of to-be-sent data, sends a part or all of the to-be-sent data to the network device on the target resource, and sends second information to the network device, where the second information indicates the target resource. It can be learned that the target resource used by the terminal device to send data is determined by the terminal device from the plurality of candidate resources based on the actual amount of the to-be-sent data, and an amount of data that can be transmitted on the plurality of candidate resources can cover an amount of data that the terminal device highly probably transmits. This helps increase a probability that the terminal device completes data transmission within a range of the plurality of candidate resources, and reduce a data transmission delay. In addition, the operation that the terminal device sends second information to the network device further helps the network device determine a resource used to receive the data. Compared with that the network device determines, in a blind detection manner, the resource used to receive the data, this can reduce power consumption of the network device.

Embodiments of this application are described below with reference to the accompanying drawings. In a schematic flowchart in this application, a corresponding method is illustrated by using an example in which a network device and a terminal device are used as execution bodies of the interaction example. However, the execution bodies for the interaction example are not limited in this application. For example, the network device in the figure may alternatively be a chip, a chip system, or a processor that supports the network device in implementing a corresponding method, or may be a logical module or software that can implement all or some functions of the network device; and the terminal device in the figure may alternatively be a chip, a chip system, or a processor that supports the terminal device in implementing a corresponding method, or may be a logical module or software that can implement all or some functions of the terminal device.

FIG. 9 is a schematic flowchart of a data transmission method according to an embodiment of this application. The data transmission method is described from a perspective of interaction between a network device and a terminal device. The data transmission method includes the following steps.

S101: The network device sends first information to the terminal device, where the first information is used to determine a plurality of candidate resources. Correspondingly, the terminal device receives the first information from the network device.

In an optional implementation, before the first information is transmitted between the network device and the terminal device, the method may further include: The terminal device sends third information to the network device, where the third information indicates N second data amounts and a transmission probability corresponding to each of the N second data amounts, the transmission probability corresponding to each second data amount is a probability that the terminal device sends data having the second data amount to the network device, and N is an integer greater than 1. Correspondingly, the network device receives the third information from the terminal device, and determines the plurality of candidate resources based on the N second data amounts and the transmission probability corresponding to each second data amount. Optionally, the transmission probability corresponding to the second data amount may be a specific value, or may be a value range. Optionally, the third information may be carried in a BSR.

For example, in a multi-modal service scenario, the terminal device is to send data from a tactile sensor to the network device. In this case, the second data amount may be an amount that is predicted by the terminal device and that is of data that is from the tactile sensor and that may arrive at the terminal device, and a transmission probability corresponding to the second data amount may be a probability that the data that has the amount predicted by the terminal device and that is from the tactile sensor arrives at the terminal device.

For another example, N is equal to 4, and four second data amounts indicated by the third information include a second data amount #1, a second data amount #2, a second data amount #3, and a second data amount #4. Table 1 shows an example of a transmission probability corresponding to each second data amount.

Table 1

| Second data amount | Second data amount #1 | Second data amount #2 | Second data amount #3 | Second data amount #4 |
|---|---|---|---|---|
| Transmission probability | $P_1$ | $P_2$ | $P_3$ | $P_4$ |

$P_1$, $P_2$, $P_3$, and $P_4$ may be specific values, or may be value ranges. For example, $P_1$ ranges from 0% to 25%, $P_2$ ranges from 25% to 50%, $P_3$ ranges from 50% to 75%, and $P_4$ ranges from 75% to 100%. In other words, a probability that an amount of the data sent by the terminal device to the network device is the second data amount #1 is 0% to 25%, a probability that an amount of the sent data is the second data amount #2 is 25% to 50%, a probability that an amount of the sent data is the second data amount #3 is 50% to 75%, and a probability that an amount of the sent data is the second data amount #4 is 75% to 100%.

It can be learned that in the foregoing implementation, the network device may determine the plurality of candidate resources based on the second data amount predicted by the terminal device and the transmission probability corresponding to the second data amount, so that an amount of data that can be transmitted on the determined plurality of candidate resources can cover an amount of data that may be sent by the terminal device. This helps increase a probability

EP 4 580 285 A1

that the terminal device completes data transmission within a range of the plurality of candidate resources, and reduce a data transmission delay. In addition, an operation that the terminal device predicts the third information and the operation that the terminal device sends third information to the network device may be performed before actual to-be-sent data arrives at the terminal device. After receiving the third information, the network device may configure, for the terminal device, a resource used to transmit the to-be-sent data. Compared with a manner in which the terminal device sends an SR and a BSR to the network device after the actual to-be-sent data arrives, to cause the network device to configure the resource, this can reduce a delay from time at which the data actually arrives at the terminal device to time at which the terminal device sends the data to the network device.

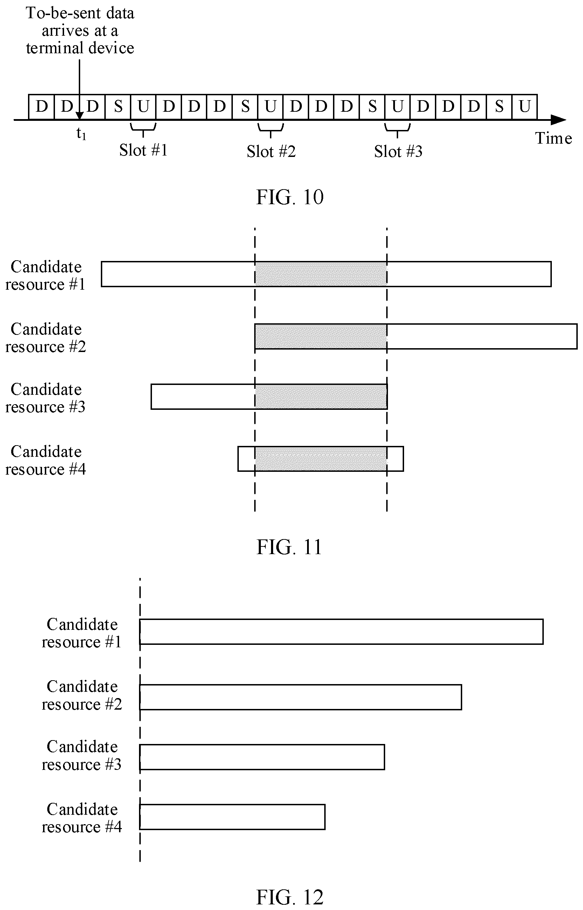

For example, with reference to FIG. 10, in FIG. 10, one small rectangle including "D" represents one slot used for downlink transmission, one small rectangle including "S" represents one slot used for switching between downlink transmission and uplink transmission, and one small rectangle including "U" represents one slot used for uplink transmission. In a manner #1, the terminal device may predict the third information and send the third information to the network device before a moment $t_1$ at which the actual to-be-sent data arrives at the terminal device. After receiving the third information, the network device may configure, for the terminal device, a resource that is used to transmit the to-be-sent data and that is in a slot #1. A manner #2 is based on the dynamic scheduling in FIG. 3. Specifically, after the to-be-sent data arrives at the terminal device at a moment $t_1$, the terminal device sends an SR to the network device in a slot #1 to request an uplink grant from the network device, and sends a BSR to the network device in a slot #2 to notify the network device of a data amount of the to-be-sent data. After receiving the BSR, the network device configures, for the terminal device, a resource that is used to transmit the to-be-sent data and that is in a slot #3. It can be learned that time at which the terminal device sends the to-be-sent data to the network device in the manner #1 is earlier than time at which the terminal device sends the to-be-sent data to the network device in the manner #2. In other words, a delay from the time at which the to-be-sent data arrives at the terminal device to the time at which the terminal device sends the to-be-sent data to the network device in the manner #1 is less than a delay from the time at which the to-be-sent data arrives at the terminal device to the time at which the terminal device sends the to-be-sent data to the network device in the manner #2.

Optionally, before the third information is transmitted between the network device and the terminal device, the method may further include: The network device sends fourth information to the terminal device, where the fourth information indicates a value of N. The fourth information may be carried in RRC signaling.

Optionally, the network device may further configure fifth information in the RRC signaling. The fifth information indicates whether the network device needs the terminal device to report the third information. Optionally, the terminal device may further notify, by using user assistant information (user assistant information, UAI), the network device whether the terminal device has a capability of determining the third information.

In another optional implementation, before the network device sends the first information to the terminal device, the method may further include: The network device determines the plurality of candidate resources based on an amount of data received from the terminal device in a first time period. In this manner, the network device may collect statistics on the amount of data received from the terminal device in a historical time period (or may collect statistics on time for receiving the amount of data), and predict, based on the collected amount of data, an amount of data that may be sent by the terminal device to the network device and a probability of sending the amount of data, so that the amount of data that can be transmitted on the determined plurality of candidate resources can cover the amount of data that may be sent by the terminal device. This helps increase the probability that the terminal device completes data transmission within the range of the plurality of candidate resources, and reduce the data transmission delay. In addition, the operation that the network device collects statistics on the amount of data may be performed before the actual to-be-sent data arrives at the terminal device. After determining the plurality of candidate resources based on the collected amount of data, the network device may send the first information to the terminal device to configure the plurality of candidate resources. Compared with the manner in which the terminal device sends the SR and the BSR to the network device after the actual to-be-sent data arrives, to cause the network device to configure the resource, this can reduce the delay from the time at which the data actually arrives at the terminal device to the time at which the terminal device sends the data to the network device.

S102: The terminal device determines the plurality of candidate resources based on the first information.

In an optional implementation, at least two of the plurality of candidate resources overlap. Specifically, the at least two of the plurality of candidate resources partially overlap, and/or the at least two of the plurality of candidate resources have an inclusion relationship. In this manner, in a scenario in which the network device separately configures candidate resources for a plurality of terminal devices, the candidate resources configured by the network device for the terminal devices may be different or not completely the same. This can reduce interference generated because different terminal devices send data, and improve resource utilization.

That the at least two candidate resources partially overlap means that the at least two candidate resources are partially the same. For example, with reference to FIG. 11, there are four candidate resources, and the four candidate resources partially overlap. Rectangular boxes in FIG. 11 represent the candidate resources, and gray parts between two dashed lines represent an overlapping part among the four candidate resources.

That the two candidate resources have an inclusion relationship means that all of one candidate resource in the two candidate resources and a part of the other candidate resource are the same. In other words, one candidate resource in the two candidate resources is a proper subset of the other candidate resource. With reference to FIG. 12, rectangular boxes represent candidate resources in FIG. 12, and a dashed line indicates that start positions of the four candidate resources are the same. In FIG. 12, a candidate resource #2, a candidate resource #3, and a candidate resource #4 are all proper subsets of a candidate resource #1, the candidate resource #3 and the candidate resource #4 are both proper subsets of the candidate resource #2, and the candidate resource #4 is a proper subset of the candidate resource #3. It can be learned that any two of the four candidate resources: the candidate resource #1, the candidate resource #2, the candidate resource #3, and the candidate resource #4 have an inclusion relationship.

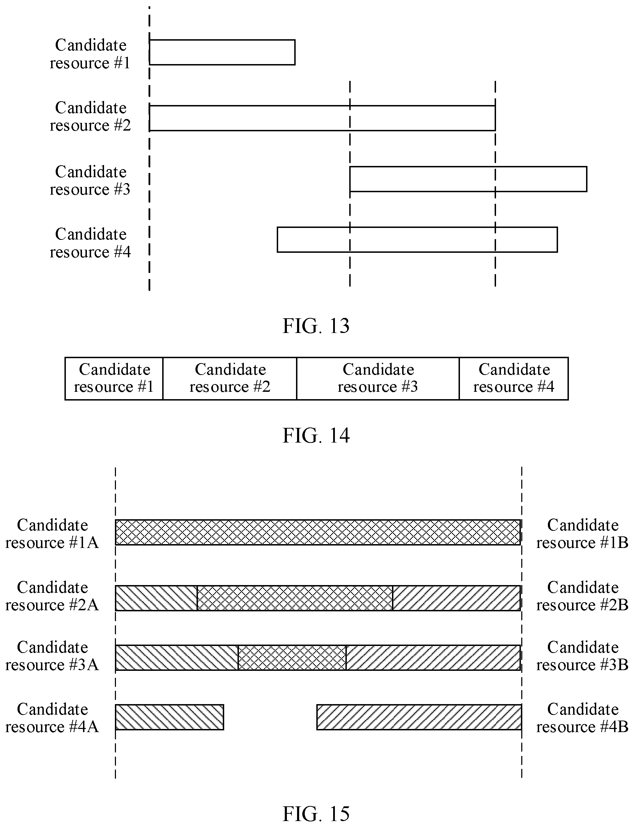

In addition, FIG. 13 shows an example of a case in which at least two of the plurality of candidate resources partially overlap, and the at least two candidate resources have an inclusion relationship. In four candidate resources shown in FIG. 13, a candidate resource #1 is a proper subset of a candidate resource #2, in other words, the candidate resource #1 and the candidate resource #2 have an inclusion relationship. The candidate resource #2, a candidate resource #3, and a candidate resource #4 partially overlap.

Optionally, a proportion of an overlapping part between the at least two candidate resources in one of the at least two candidate resources is greater than or equal to a first threshold. For proportions of the overlapping part in different candidate resources in the at least two candidate resources, values of the first threshold may be different. For example, with reference to FIG. 11, a proportion of the overlapping part (the gray part in FIG. 11) among the four candidate resources in the candidate resource #1 is greater than or equal to $X_1$%, a proportion of the overlapping part in the candidate resource #2 is greater than or equal to $X_2$%, a proportion of the overlapping part in the candidate resource #3 is greater than or equal to $X_3$%, and a proportion of the overlapping part in the candidate resource #4 is greater than or equal to $X_4$%. Values of $X_1$, $X_2$, $X_3$, and $X_4$ may be different. In addition, the first threshold may be predefined, or may be manually set. This is not limited.

In another optional implementation, the plurality of candidate resources do not overlap each other. For example, with reference to FIG. 14, a candidate resource #1, a candidate resource #2, a candidate resource #3, and a candidate resource #4 do not overlap each other.

In an optional implementation, in a scenario in which there are a plurality of terminal devices, the network device may separately send the first information to the plurality of terminal devices, and a plurality of candidate resources determined by using the first information sent to different terminal devices are different or not completely the same. Optionally, overlapping parts between the plurality of candidate resources configured by the network device for different terminal devices gradually decrease in descending order of resources.

For example, with reference to FIG. 15, in FIG. 15, rectangular boxes with a top-left to bottom-right line pattern and a cross grid pattern represent candidate resources determined by a terminal device #1 based on first information #1, rectangular boxes with a top-right to bottom-left line pattern and a cross grid pattern represent candidate resources determined by a terminal device #2 based on first information #2, and rectangular boxes with a cross grid pattern represent overlapping parts between the candidate resources determined based on the first information #1 and the candidate resources determined based on the first information #2. A left dashed line represents that start positions of four candidate resources determined by the terminal device #1 are the same, and a right dashed line represents that start positions of four candidate resources determined by the terminal device #2 are the same. The network device sends the first information #1 to the terminal device #1, where the first information #1 is used by the terminal device #1 to determine a candidate resource #1A, a candidate resource #2A, a candidate resource #3A, and a candidate resource #4A, where the candidate resource #1A>the candidate resource #2A>the candidate resource #3A>the candidate resource #4A. The network device sends the first information #2 to the terminal device #2, where the first information #2 is used by the terminal device #2 to determine a candidate resource #1B, a candidate resource #2B, a candidate resource #3B, and a candidate resource #4B, where the candidate resource #1B>the candidate resource #2B>the candidate resource #3B>the candidate resource #4B. An overlapping part between the candidate resource #1A and the candidate resource #1B>an overlapping part between the candidate resource #2A and the candidate resource #2B>an overlapping part between the candidate resource #3A and the candidate resource #3B>an overlapping part between the candidate resource #4A and the candidate resource #4B.

In addition, resource utilization can be improved in a manner in which a plurality of candidate resources of different terminal devices partially overlap. For example, with reference to FIG. 15, when the terminal device #1 sends data by using the candidate resource #4B and the terminal device #2 sends data by using the candidate resource 3B, an overlapping part between the candidate resource 3A and the candidate resource #4B is used by the terminal device #1 to send data, and the remaining of the resource other than the overlapping part between the candidate resource #4B and the candidate resource 3A is not used by the terminal device #1 to send data. Because the remaining of the resource and the candidate resource 3B partially overlap, a part of the remaining of the resource may be used by the terminal device #2 to send data. Compared with a case that the candidate resource 3A and the candidate resource 3B do not overlap each other, this reduces a waste of resources, and improves resource utilization.

In an optional implementation, the plurality of candidate resources are frequency domain resources, time domain resources, or time-frequency domain resources. In the three cases, specific forms in which the first information is used to determine the plurality of candidate resources may be different. The following separately describes the first information in the three cases: the plurality of candidate resources being frequency domain resources, the plurality of candidate resources being time domain resources, and the plurality of candidate resources being time-frequency domain resources, as described in the following optional implementation 1.1 to implementation 1.3.

Implementation 1.1: The plurality of candidate resources are frequency domain resources. In this case, the first information may be carried in DCI, and is indicated by an FDRA in the DCI. Specifically, each of the plurality of candidate resources is indicated by one FDRA, or the plurality of candidate resources are all indicated by one FDRA. Alternatively, the first information may be carried in RRC, and the plurality of candidate resources may be configured based on a type-1 CG.

When each of the plurality of candidate resources is indicated by one FDRA, the DCI may carry a plurality of FDRAs, and each of the plurality of FDRAs indicates one of the plurality of candidate resources. Alternatively, the DCI may carry one FDRA, indicating that a plurality of FDRAs of the plurality of candidate resources are determined based on the FDRA carried in the DCI and a preconfigured relationship between the plurality of FDRAs and the FDRA carried in the DCI. The preconfigured relationship may be carried in the RRC signaling. For example, the preconfigured relationship in the RRC signaling may be represented as follows: The preconfigured relationship indicates a proportion of the plurality of FDRAs of the plurality of candidate resources in the FDRA carried in the DCI, and start frequency domain positions of candidate resources respectively indicated by the plurality of FDRAs and a start frequency domain position of a candidate resource indicated by the FDRA carried in the DCI are the same.

For example, an FDRA #1 indicates a candidate resource #1, an FDRA #2 indicates a candidate resource #2, an FDRA #3 indicates a candidate resource #3, and an FDRA #4 indicates a candidate resource #4. In a manner, the FDRA #1, the FDRA #2, the FDRA #3, and the FDRA #4 are carried in the DCI, and the terminal device separately determines the candidate resource #1, the candidate resource #2, the candidate resource #3, and the candidate resource #4 based on the FDRA #1, the FDRA #2, the FDRA #3, and the FDRA #4 that are carried in the DCI. In another manner, the FDRA #1 is carried in the DCI, and the preconfigured relationship in the RRC signaling is represented as follows: Start frequency domain positions of candidate resources indicated by the FDRA #2, the FDRA #3, and the FDRA #4 and a start frequency domain position of the candidate resource indicated by the FDRA #1 are the same, and proportions of the candidate resources indicated by the FDRA #2, the FDRA #3, and the FDRA #4 in the candidate resource indicated by the FDRA #1 are sequentially 80%, 70%, and 50%. In this case, after determining the candidate resource #1 indicated by the FDRA #1, the terminal device uses the start frequency domain position of the candidate resource #1 as the start frequency domain positions of the candidate resource #2, the candidate resource #3, and the candidate resource #4, and determines 80% of the candidate resource #1 as the candidate resource #2, 70% of the candidate resource #1 as the candidate resource #3, and 50% of the candidate resource #1 as the candidate resource #4.

When the plurality of candidate resources are all indicated by one FDRA, the DCI may carry one FDRA, where the FDRA indicates the plurality of candidate resources. In this case, the plurality of candidate resources indicated by one FDRA do not overlap each other. For example, there is one FDRA in the DCI indicating a plurality of resource block groups (resource block groups, RBGs). A frequency domain resource of each of the plurality of RBGs is a candidate resource.

Alternatively, when the plurality of candidate resources are all indicated by one FDRA, the RRC signaling may carry one frequency domain allocation (FrequencyDomainAllocation) field, where the field indicates the plurality of candidate resources, for example, may indicate a segment of consecutive resource blocks (resource blocks) in frequency domain.

Implementation 1.2: The plurality of candidate resources are time domain resources. The first information may be carried in the RRC signaling.

Optionally, each of the plurality of candidate resources is configured by using one field in the RRC signaling. Specifically, a plurality of fields may be added to the RRC signaling, and one of the plurality of fields may be used to configure one candidate resource. For example, one field is used to carry a start time domain position (for example, a start symbol) and a time domain length (for example, a symbol length) of one candidate resource, or one field is used to carry a start time domain position (for example, a start symbol) and an end time domain position (for example, an end symbol) of one candidate resource. Content carried in the field used to configure the candidate resource is not limited in this embodiment of this application. When one field is used to carry a start symbol and a symbol length of one candidate resource, the plurality of fields added to the RRC signaling may be a plurality of start symbol and length (startSymbolAndLength) fields added to a PUSCH-time domain resource allocation (time domain resource allocation, TDRA) configuration in the RRC signaling.

Optionally, the plurality of candidate resources are all configured by using one field in the RRC signaling. For example, there is a field configured with a start symbol and a symbol length in the RRC signaling, and each of a plurality of symbols (Symbol) determined based on the start symbol and the symbol length is a candidate resource.

Implementation 1.3: The plurality of candidate resources are time-frequency domain resources. In this case, a frequency domain position of each of the plurality of candidate resources may be indicated by using DCI or configured by using RRC signaling, and a time domain position of each of the plurality of candidate resources may be configured by using the RRC signaling. A manner in which the DCI indicates the frequency domain position of the candidate resource is similar to a manner in which the DCI indicates the frequency domain resource in the implementation 1.1. A manner of configuring the frequency domain position of the candidate resource by using RRC signaling is similar to a manner of configuring the frequency domain resource by using the RRC signaling in the implementation 1.1. A manner of configuring the frequency domain position of the candidate resource by using RRC signaling is similar to a manner of configuring the time domain resource by using the RRC signaling in the implementation 1.2. Details are not described again.

S103: The terminal device determines a target resource from the plurality of candidate resources based on a first data amount of the to-be-sent data.

The target resource may be at least one of the plurality of candidate resources. A manner of determining the target resource may be described in the following optional implementation 2.1 to implementation 2.4.

Implementation 2.1: There is a case in which an amount of data that can be transmitted on each of the at least one candidate resource in the plurality of candidate resources is greater than or equal to the first data amount. In this case, the target resource may be a candidate resource that is in the plurality of candidate resources and on which data with an amount greater than or equal to the first data amount and closest to the first data amount can be transmitted.

For example, amounts of data that can be transmitted on a candidate resource #1, a candidate resource #2, a candidate resource #3, and a candidate resource #4 are respectively $Q_1$, $Q_2$, $Q_3$, and $Q_4$, where $Q_1 > Q_2 > Q_3 > Q_4$. If the first data amount is less than or equal to $Q_4$, the target resource is the candidate resource #4; if the first data amount is greater than $Q_4$ and less than or equal to $Q_3$, the target resource is the candidate resource #3; if the first data amount is greater than $Q_3$ and less than or equal to $Q_2$, the target resource is the candidate resource #2; or if the first data amount is greater than $Q_2$ and less than or equal to $Q_1$, the target resource is the candidate resource #1.

Implementation 2.2: An amount of data that can be transmitted on each of the plurality of candidate resources is less than the first data amount. In this case, the target resource may be a candidate resource that is in the plurality of candidate resources and on which a largest amount of data can be transmitted. For example, amounts of data that can be transmitted on a candidate resource #1, a candidate resource #2, a candidate resource #3, and a candidate resource #4 are respectively $Q_1$, $Q_2$, $Q_3$, and $Q_4$, where $Q_1 > Q_2 > Q_3 > Q_4$. If $Q_1$, $Q_2$, $Q_3$, and $Q_4$ are all less than the first data amount, the target resource is the candidate resource #1.

The implementation 2.1 and the implementation 2.2 may be applicable to a case in which at least two of the plurality of candidate resources overlap, or may be applicable to a case in which the plurality of candidate resources do not overlap each other. In addition, when the plurality of candidate resources do not overlap each other, in addition to the implementation 2.1 and the implementation 2.2, the target resource may be alternatively determined based on an optional implementation 2.3 or an optional implementation 2.4.

Implementation 2.3: The plurality of candidate resources do not overlap each other, and a total amount of data that can be transmitted on the plurality of candidate resources is greater than or equal to the first data amount. In this case, the target resource may be a group of candidate resources that is in a plurality of groups of candidate resources and on which data with an amount greater than or equal to the first data amount and closest to the first data amount can be transmitted. Each of the plurality of groups of candidate resources includes at least one of the plurality of candidate resources.

For example, amounts of data that can be transmitted on a candidate resource #1, a candidate resource #2, and a candidate resource #3 are respectively $Q_1$, $Q_2$, and $Q_3$. Seven groups of candidate resources: a group #1 to a group #7, may be obtained by selecting one, two, and three candidate resources from the three candidate resources. The group #1: the candidate resource #1; the group #2: the candidate resource #2; the group #3: the candidate resource #3; the group #4: the candidate resource #1 and the candidate resource #2; the group #5: the candidate resource #1 and the candidate resource #3; the group #6: the candidate resource #2 and the candidate resource #3; and the group #7: the candidate resource #1, the candidate resource #2, and the candidate resource #3. Amounts of data that can be transmitted on the group #1 of candidate resources to the group #7 of candidate resources are sequentially $Q_1$, $Q_2$, $Q_3$, $Q_1+Q_2$, $Q_1+Q_3$, $Q_2+Q_3$, and $Q_1+Q_2+Q_3$. The target resource may be a group of candidate resources that is in the seven groups of candidate resources and on which data with an amount greater than or equal to the first data amount and closest to the first data amount can be transmitted. For example, if $Q_1+Q_2$ in the seven data amounts is greater than or equal to the first data amount and is closest to the first data amount, the target resource are the candidate resource #2 and the candidate resource #3 in the group #4.

For another example, the network device configures M consecutive symbols for the terminal device, each of the M symbols is a candidate resource, and a total amount of data that can be transmitted on the M symbols is greater than or equal to the first data amount. The terminal device may determine, from the M symbols, m consecutive symbols on which data with an amount equal to the first data amount can be transmitted. The m symbols are target resources. M is an integer greater than 1, and m is a positive integer less than or equal to M.

Implementation 2.4: The plurality of candidate resources do not overlap each other, and a total amount of data that can be transmitted on the plurality of candidate resources is less than the first data amount. In this case, the target resources may be the plurality of candidate resources. For example, if amounts of data that can be transmitted on a candidate resource #1, a candidate resource #2, and a candidate resource #3 are respectively $Q_1$, $Q_2$, and $Q_3$. If $Q_1+Q_2+Q_3$ is less than the first data amount, the target resources are the candidate resource #1, the candidate resource #2, and the candidate resource #3. For another example, the network device configures M consecutive symbols for the terminal device, each of the M symbols is a candidate resource, and a total amount of data that can be transmitted on the M symbols is less than the first data amount. In this case, the M symbols are all target resources.

In an optional implementation, the first data amount may be a buffer size (buffer size) of the terminal device. For example, the first data amount may be a buffer size corresponding to a logical channel that is in the terminal device and that is used to transmit the to-be-sent data.

S104: The terminal device sends second information to the network device, where the second information indicates the target resource. Correspondingly, the network device receives the second information from the terminal device.

In an optional implementation, when the plurality of candidate resources are frequency domain resources or time-frequency domain resources, that the terminal device sends second information to the network device may include: The terminal device sends a demodulation reference signal (demodulation reference signal, DMRS) to the network device, where the second information is carried in a frequency domain position of the DMRS. Correspondingly, the network device receives the DMRS from the terminal device. In other words, the frequency domain position of the DMRS indicates a frequency domain position of the target resource. In this case, the network device may determine the frequency domain position of the detected DMRS as the frequency domain position of the target resource.

In an optional manner, a field may be added to the RRC signaling. The field may indicate whether the terminal device is allowed to send the DMRS on some or all of the plurality of candidate resources. If the field indicates that the terminal device is allowed to send the DMRS on some or all of the plurality of candidate resources, the terminal device may send the DMRS on some of the plurality of candidate resources, or may send the DMRS on all of the plurality of candidate resources, instead of necessarily sending the DMRS on all of the plurality of candidate resources. Optionally, to simplify complexity of detecting the DMRS by the network device, a field may be further added to the RRC signaling. The field may indicate a granularity at which a resource used to send the DMRS accounts for the plurality of candidate resources. A proportion of the resource used to send the DMRS in the plurality of candidate resources is a positive integer multiple of the granularity. In this case, a proportion of the target resource in the plurality of candidate resources is also a positive integer multiple of the granularity. For example, there are 16 candidate resources, each of the 16 RBGs is a candidate resource, and a granularity indicated by the field added to the RRC signaling is $\dfrac{1}{8}$ . In this case, a proportion of resources used to send the DMRS in the 16 RBGs is $\dfrac{1}{8}, \dfrac{2}{8}, \dfrac{3}{8}, \dfrac{4}{8}, \dfrac{5}{8}, \dfrac{6}{8}, \dfrac{7}{8}$ , or 1. To be specific, the resources used to send the DMRS are two RBGs, four RBGs, six RBGs, eight RBGs, 10 RBGs, 12 RBGs, 14 RBGs, or 16 RBGs in the 16 RBGs.

In another optional manner, a field indicates whether the terminal device is allowed to send the DMRS on some or all of the plurality of candidate resources, and/or a field indicates a granularity at which the resource used to send the DMRS accounts for the plurality of candidate resources may be added to a configuration for a PUSCH.

In an optional implementation, the second information is carried in uplink control information (uplink control information, UCI). When the plurality of candidate resources are configured based on a CG, the second information may be carried in configuration grant uplink control information (CG-UCI). Optionally, the second information indicates an index of the target resource. For example, the plurality of candidate resources are frequency domain resources or time-frequency domain resources, a frequency domain position of each of the plurality of candidate resources is indicated by one FDRA, the second information indicates an index of an FDRA corresponding to the target resource, and a start frequency domain position for transmitting the UCI and a start frequency domain position of the target resource may be the same. For another example, the plurality of candidate resources are time domain resources, the first information is for configuring a start time domain position and a time domain length of each of the plurality of candidate resources, and the second information indicates a start time domain position and a time domain length of the target resource. Optionally, a field may be added to UCI in a format 2, a format 3, or a format 4. The field is used to carry the index of the target resource.

Optionally, the second information indicates a proportion of the target resource in the plurality of candidate resources. This manner may be applicable to a scenario in which the plurality of candidate resources do not overlap each other. A value of a bit carrying the second information in the DCI may vary with the proportion of the target resource in the plurality of candidate resources.

For example, one FDRA in the DCI indicates frequency domain resources of a plurality of RBGs, and a frequency domain resource of each of the plurality of RBGs is a candidate resource. The target resource is a frequency domain resource of at least one RBG starting from an RBG with a lowest frequency in the plurality of RBGs. When a proportion of the target resource to the plurality of RBGs is 0.5, a value of a bit carrying the second information in the UCI is 0. When a proportion of the target resource to the plurality of RBGs is 1, a value of a bit carrying the second information in the UCI is 1. In this case, when the value of the bit carrying the second information in the UCI is 0, the network device may determine that frequency domain resources of half of the plurality of RBGs starting from the RBG with a smallest frequency in the plurality of RBGs is the target resource; or when the value of the bit carrying the second information in the UCI is 1, the network device may determine that the plurality of RBGs are all target resources.

For another example, a plurality of symbols are configured for the terminal device by using the RRC signaling, each of the plurality of symbols is a candidate resource, the target resource is at least one of the plurality of symbols, and a start symbol of the at least one symbol and a start symbol of the plurality of symbols are the same. When a proportion of the target resource to the plurality of symbols is 0.5, a value of a bit carrying the second information in the UCI is 0. When a proportion of the target resource to the plurality of symbols is 1, a value of a bit carrying the second information in the UCI is 1.

Optionally, the second information indicates a resource indication value (resource indicator value, RIV) corresponding to the target resource.

Optionally, when the plurality of candidate resources do not overlap each other, the second information indicates a bitmap, each bit in the bitmap corresponds to at least one of the plurality of candidate resources, and a value of each bit represents whether a candidate resource corresponding to the bit belongs to the target resource. Optionally, a value of the bit may be "0" or "1" to indicate whether the candidate resource corresponding to the bit belongs to the target resource. For example, when the value of the bit is "1", the candidate resource corresponding to the bit belongs to the target resource, and when the value of the bit is "0", the candidate resource corresponding to the bit does not belong to the target resource; or when the value of the bit is "1", the candidate resource corresponding to the bit does not belong to the target resource, and when the value of the bit is "0", the candidate resource corresponding to the bit belongs to the target resource. In addition, the value of the bit may be alternatively represented in another manner. For example, when the value of the bit is "true", it indicates that the candidate resource corresponding to the bit belongs to the target resource, and when the value of the bit is "false", it indicates that the candidate resource corresponding to the bit does not belong to the target resource. This is not limited.

For example, one FDRA in the DCI indicates frequency domain resources of eight RBGs (which are sequentially an RBG #1 to an RBG #8), and a frequency domain resource of each of the eight RBGs is a candidate resource. The bitmap includes eight bits, and the eight bits are in one-to-one correspondence with the eight RBGs. If the target resources are frequency domain resources of the RBG #1 to the RBG #4, values of the eight bits are sequentially 1, 1, 1, 1, 0, 0, 0, and 0. When the value of the bit is "1", the candidate resource corresponding to the bit belongs to the target resource. When the value of the bit is "0", the candidate resource corresponding to the bit does not belong to the target resource; and the bitmap is represented as [1, 1, 1, 1, 0, 0, 0, 0].

S105: The terminal device sends a part or all of the to-be-sent data to the network device on the target resource. Correspondingly, the network device receives the data from the terminal device on the target resource.

When the amount of data that can be transmitted on the target resource is less than the first data amount, the terminal device sends a part of the to-be-sent data to the network device on the target resource. When the amount of data that can be transmitted on the target resource is greater than or equal to the first data amount, the terminal device sends all of the to-be-sent data to the network device on the target resource.

In addition, a sequence of the operation that the terminal device sends second information to the network device and the operation that the terminal device sends a part or all of the to-be-sent data to the network device on the target resource is not limited in this embodiment of this application. Specifically, the operation that the terminal device sends second information to the network device may be performed before the operation that the terminal device sends a part or all of the to-be-sent data to the network device on the target resource, or may be performed after the operation that the terminal device sends a part or all of the to-be-sent data to the network device on the target resource. When the second information is carried in the UCI, the terminal device may perform the two operations simultaneously. To be specific, the terminal device simultaneously sends the second information to the network device and sends the part or all of the to-be-sent data to the network device on the target resource. In addition, for the network device, after receiving the second information from the terminal device to determine the target resource, the network device receives the data from the terminal device on the target resource.

In conclusion, in the data transmission method, the terminal device receives the first information from the network device, determines the plurality of candidate resources based on the first information, determines the target resource from the plurality of candidate resources based on the first data amount of the to-be-sent data, sends a part or all of the to-be-sent data to the network device on the target resource, and sends the second information to the network device, where the second information indicates the target resource. This method is equivalent to that the network device may allocate, to the terminal device, a "resource pool" including the plurality of candidate resources. The terminal device may select, based on the actual amount of the to-be-sent data, a matched resource from the "resource pool", to send the to-be-sent data. An amount of data that can be transmitted on the plurality of candidate resources in the "resource pool" can cover an amount of data that the terminal device highly probably transmits. This helps increase the probability that the terminal device completes data transmission within the range of the plurality of candidate resources, and reduce the data transmission delay. In addition, the operation that the terminal device sends second information to the network device further helps the network device determine a resource used to receive the data. Compared with that the network device receives data in a blind detection manner, this can reduce power consumption of the network device.

In a scenario in which candidate resources are frequency domain resources, and a target resource is one of the plurality of candidate resources, first information may be used to determine the plurality of frequency domain resources, and second information may indicate one frequency domain resource determined by a terminal device from the plurality of frequency domain resources. With reference to the data transmission method shown in FIG. 9, interaction between the terminal device and a network device in this scenario may include but is not limited to the following steps.

S21: The network device sends the first information to the terminal device, and correspondingly, the terminal device receives the first information.

S22: The terminal device determines the plurality of frequency domain resources based on the first information.

In an optional implementation, the network device may indicate a plurality of FDRAs in DCI. The plurality of FDRAs are in one-to-one correspondence with the plurality of frequency domain resources, and each of the plurality of frequency domain resources is indicated by a corresponding FDRA. Further, the terminal device may determine the plurality of frequency domain resources based on the plurality of FDRAs indicated in the DCI.

In another optional implementation, the network device may indicate one FDRA in DCI, and configure, in RRC signaling, a preconfigured relationship between a plurality of FDRAs and the FDRA indicated in the DCI. A plurality of FDRAs are in one-to-one correspondence with the plurality of frequency domain resources, and each of the plurality of frequency domain resources is indicated by a corresponding FDRA. In this way, the terminal device may determine, based on the FDRA indicated in the DCI and the preconfigured relationship configured in the RRC signaling, the plurality of frequency domain resources indicated by the plurality of FDRA.

In an optional implementation, at least two of the plurality of frequency domain resources partially overlap, and/or at least two of the plurality of frequency domain resources have an inclusion relationship. Alternatively, the plurality of frequency domain resources do not overlap each other.

S23: The terminal device determines one frequency domain resource from the plurality of frequency domain resources based on a first data amount of to-be-sent data.

In an optional implementation, when an amount of data that can be transmitted on a frequency domain resource in the plurality of frequency domain resources is greater than or equal to the first data amount, the determined frequency domain resource is a frequency domain resource that is in the plurality of frequency domain resources and on which data with an amount greater than or equal to the first data amount and closest to the first data amount can be transmitted.

In another optional implementation, when an amount of data that can be transmitted on each of the plurality of frequency domain resources is less than the first data amount, the determined frequency domain resource is a frequency domain resource that is in the plurality of frequency domain resources and on which a largest amount of data can be transmitted.

S24: The terminal device sends the second information to the network device, where the second information indicates the frequency domain resource determined by the terminal device. Correspondingly, the network device receives the second information from the terminal device, and then, the network device may learn of, based on the received second information, the frequency domain resource determined by the terminal device.

In an optional implementation, the second information is carried in UCI, and the second information indicates an index of an FDRA corresponding to the frequency domain resource determined by the terminal device. Optionally, a start position of a frequency domain resource used to transmit the UCI and a start position of the frequency domain resource determined by the terminal device may be the same.

S25: The terminal device sends a part or all of the to-be-sent data to the network device on the determined frequency domain resource. Correspondingly, the network device receives the data from the terminal device on the frequency domain resource determined by the terminal device.

A sequence of the operation that the terminal device sends the second information to the network device and the operation that the terminal device sends a part or all of the to-be-sent data to the network device on the determined frequency domain resource is not limited in this embodiment of this application.

S21 corresponds to S101 in the method shown in FIG. 9, S22 corresponds to S102 in FIG. 9, S23 corresponds to S103 in FIG. 9, S24 corresponds to S104 in FIG. 9, and S25 corresponds to S105 in FIG. 9. For specific descriptions, refer to related descriptions of corresponding steps in the data transmission method shown in FIG. 9. In addition, this embodiment may further include another implementation of the data transmission method shown in FIG. 9, and there are also corresponding beneficial effects. Details are not described again.

In conclusion, the terminal device may determine, based on the actual amount of the to-be-sent data, one frequency domain resource from the plurality of frequency domain resources configured by the network device to send the to-be-sent data. An amount of data that can be transmitted on the plurality of frequency domain resources can cover an amount of data that the terminal device highly probably transmits. This helps increase a probability that the terminal device completes data transmission within a range of the plurality of frequency domain resources, and reduce a data transmission delay.

In a scenario in which candidate resources are time domain resources, and a target resource is one of the plurality of candidate resources, first information may be used to determine a plurality of time domain resources, and second information may indicate one time domain resource determined by a terminal device from the plurality of time domain resources. With reference to the data transmission method shown in FIG. 9, interaction between the terminal device and a network device in this scenario may include but is not limited to the following steps.

S31: The network device sends the first information to the terminal device, and correspondingly, the terminal device receives the first information.

S32: The terminal device determines the plurality of time domain resources based on the first information.

In an optional implementation, the network device may add a plurality of fields to TDRA of RRC signaling. The plurality of fields are in one-to-one correspondence with the plurality of time domain resources, and each of the plurality of time domain resources is indicated by a corresponding field. Further, the terminal device may determine the plurality of time domain resources based on the plurality of fields in the TDRA of the RRC signaling. Optionally, each of the plurality of fields may indicate a time domain start position and a time domain length of a time domain resource corresponding to the field.

In an optional implementation, at least two of the plurality of time domain resources partially overlap, and/or at least two of the plurality of time domain resources have an inclusion relationship. Alternatively, the plurality of time domain resources do not overlap each other.

S33: The terminal device determines one time domain resource from the plurality of time domain resources based on a first data amount of to-be-sent data.

In an optional implementation, when an amount of data that can be transmitted on a time domain resource in the plurality of time domain resources is greater than or equal to the first data amount, the determined time domain resource is a time domain resource that is in the plurality of time domain resources and on which data with an amount greater than or equal to the first data amount and closest to the first data amount can be transmitted.

In another optional implementation, when an amount of data that can be transmitted on each of the plurality of time domain resources is less than the first data amount, the determined time domain resource is a time domain resource that is in the plurality of time domain resources and on which a largest amount of data can be transmitted.

S34: The terminal device sends the second information to the network device, where the second information indicates the time domain resource determined by the terminal device. Correspondingly, the network device receives the second information from the terminal device, and then, the network device may learn of, based on the received second information, the time domain resource determined by the terminal device.

In an optional implementation, the second information is carried in UCI, and the second information indicates a start time domain position and a time domain length of the time domain resource determined by the terminal device.

S35: The terminal device sends a part or all of the to-be-sent data to the network device on the determined time domain resource. Correspondingly, the network device receives the data from the terminal device on the time domain resource determined by the terminal device.

A sequence of the operation that the terminal device sends the second information to the network device and the operation that the terminal device sends a part or all of the to-be-sent data to the network device on the determined time domain resource is not limited in this embodiment of this application.

S31 corresponds to S101 in the method shown in FIG. 9, S32 corresponds to S102 in FIG. 9, S33 corresponds to S103 in FIG. 9, S34 corresponds to S104 in FIG. 9, and S35 corresponds to S105 in FIG. 9. For specific descriptions, refer to related descriptions of corresponding steps in the data transmission method shown in FIG. 9. In addition, this embodiment may further include another implementation of the data transmission method shown in FIG. 9, and there are also corresponding beneficial effects. Details are not described again.

In conclusion, the terminal device may determine, based on the actual amount of the to-be-sent data, one time domain resource from the plurality of time domain resources configured by the network device to send the to-be-sent data. An amount of data that can be transmitted on the plurality of time domain resources can cover an amount of data that the terminal device highly probably transmits. This helps increase a probability that the terminal device completes data transmission within a range of the plurality of time domain resources, and reduce a data transmission delay.

With reference to the data transmission method shown in FIG. 9, in a scenario in which a plurality of candidate resources are frequency domain resources of a plurality of RBGs indicated by DCI by using one FDRA, and one candidate resource is a frequency domain resource of one RBG, interaction between a terminal device and a network device may include but is not limited to the following steps.

S41: A network device sends first information to the terminal device, and correspondingly, the terminal device receives the first information. The first information is carried in the DCI.

S42: The terminal device determines the plurality of RBGs based on the first information.

S43: The terminal device determines at least one RBG from the plurality of RBGs based on a first data amount of to-be-sent data.

S44: The terminal device sends second information to the network device, where the second information indicates the at least one RBG determined by the terminal device. Correspondingly, the network device receives the second information from the terminal device, and then, the network device may learn of, based on the received second information, the at least one RBG determined by the terminal device.

In an optional implementation, the second information indicates a proportion of the determined at least one RBG in the plurality of RBGs. Alternatively, the second information indicates an RIV. The RIV may represent position distribution of the determined at least one RBG in the plurality of RBGs, and the determined at least one RBG is continuously distributed in the plurality of RBGs. Alternatively, the second information indicates a bitmap, each bit in the bitmap corresponds to at least one of the plurality of RBGs, and a value of each bit represents whether a frequency domain resource of an RBG corresponding to the bit is used by the terminal device to send the to-be-sent data.

In another optional implementation, that the terminal device sends second information to the network device includes: The terminal device sends a DMRS to the network device, where the second information is carried in a frequency domain position of the DMRS.

S45: The terminal device sends a part or all of the to-be-sent data to the network device on the frequency domain resource of the determined at least one RBG. Correspondingly, the network device receives the data from the terminal device.

A sequence of the operation that the terminal device sends second information to the network device and the operation that the terminal device sends a part or all of the to-be-sent data to the network device on the frequency domain resource of the determined at least one RBG is not limited in this embodiment of this application.

S41 corresponds to S101 in the method shown in FIG. 9, S42 corresponds to S102 in FIG. 9, S43 corresponds to S103 in FIG. 9, S44 corresponds to S104 in FIG. 9, and S45 corresponds to S105 in FIG. 9. For specific descriptions, refer to related descriptions of corresponding steps in the data transmission method shown in FIG. 9. In addition, this embodiment may further include another implementation of the data transmission method shown in FIG. 9, and there are also corresponding beneficial effects. Details are not described again.

With reference to the data transmission method shown in FIG. 9, in a scenario in which a plurality of candidate resources are a plurality of symbols determined based on a start symbol and a symbol length that are configured by using RRC signaling, and one candidate resource is one symbol, interaction between a terminal device and a network device may include but is not limited to the following steps.

S51: The network device sends first information to the terminal device, and correspondingly, the terminal device receives the first information. The first information is carried in the RRC signaling.

S52: The terminal device determines the plurality of symbols based on the first information.

S53: The terminal device determines at least one symbol from the plurality of symbols based on the first data amount of to-be-sent data.

S54: The terminal device sends second information to the network device, where the second information indicates the at least one symbol determined by the terminal device. Correspondingly, the network device receives the second information from the terminal device, and then, the network device may learn of, based on the received second information, the at least one symbol determined by the terminal device.

In an optional implementation, the second information indicates a proportion of the determined at least one symbol in the plurality of symbols. Alternatively, the second information indicates a bitmap, each bit in the bitmap corresponds to at least one of the plurality of symbols, and a value of each bit indicates whether a symbol corresponding to the bit is used by the terminal device to send the to-be-sent data.

S55: The terminal device sends a part or all of the to-be-sent data to the network device on the determined at least one symbol. Correspondingly, the network device receives the data from the terminal device.

A sequence of the operation that the terminal device sends second information to the network device and the operation that the terminal device sends a part or all of the to-be-sent data to the network device on the determined at least one symbol is not limited in this embodiment of this application.

S51 corresponds to S101 in the method shown in FIG. 9, S52 corresponds to S102 in FIG. 9, S53 corresponds to S103 in FIG. 9, S54 corresponds to S104 in FIG. 9, and S55 corresponds to S105 in FIG. 9. For specific descriptions, refer to related descriptions of corresponding steps in the data transmission method shown in FIG. 9. In addition, this embodiment may further include another implementation of the data transmission method shown in FIG. 9, and there are also corresponding beneficial effects. Details are not described again.

With reference to the data transmission method shown in FIG. 9, in a scenario in which a plurality of candidate resources are configured based on a CG, interaction between a terminal device and a network device may include but is not limited to the following steps.

S61: The network device sends first information to the terminal device, and correspondingly, the terminal device receives the first information, where the first information is used to determine the plurality of candidate resources.

When the plurality of candidate resources are configured based on a type-1 CG, and the plurality of candidate resources are time domain resources, frequency domain resources, or time-frequency domain resources, the first information may be carried in RRC signaling.

When the plurality of candidate resources are configured based on a type-2 CG and the plurality of candidate resources are time domain resources, the first information may be carried in RRC signaling. When the plurality of candidate resources are configured based on a type-2 CG and the plurality of candidate resources are frequency domain resources, the first information may be carried in DCI. In a scenario in which the plurality of candidate resources are configured based on the type-2 CG and the plurality of candidate resources are time-frequency domain resources, time domain positions of the plurality of candidate resources indicated by the first information may be carried in RRC signaling, and frequency domain positions of the plurality of candidate resources may be carried in DCI.

S62: The terminal device determines the plurality of candidate resources based on the first information.

S63: The terminal device determines a target resource from the plurality of candidate resources based on a first data amount of to-be-sent data.

S64: The terminal device sends second information to the network device, where the second information indicates the target resource. Correspondingly, the network device receives the second information from the terminal device, and then, the network device may determine the target resource based on the received second information. The second information may be carried in CG-UCI.

S65: The terminal device sends a part or all of the to-be-sent data to the network device on the target resource. Correspondingly, the network device receives the data from the terminal device on the target resource.

S61 corresponds to S101 in the method shown in FIG. 9, S62 corresponds to S102 in FIG. 9, S63 corresponds to S103 in FIG. 9, S64 corresponds to S104 in FIG. 9, and S65 corresponds to S105 in FIG. 9. For specific descriptions, refer to related descriptions of corresponding steps in the data transmission method shown in FIG. 9. In addition, this embodiment may further include another implementation of the data transmission method shown in FIG. 9, and there are also corresponding beneficial effects. Details are not described again.

To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

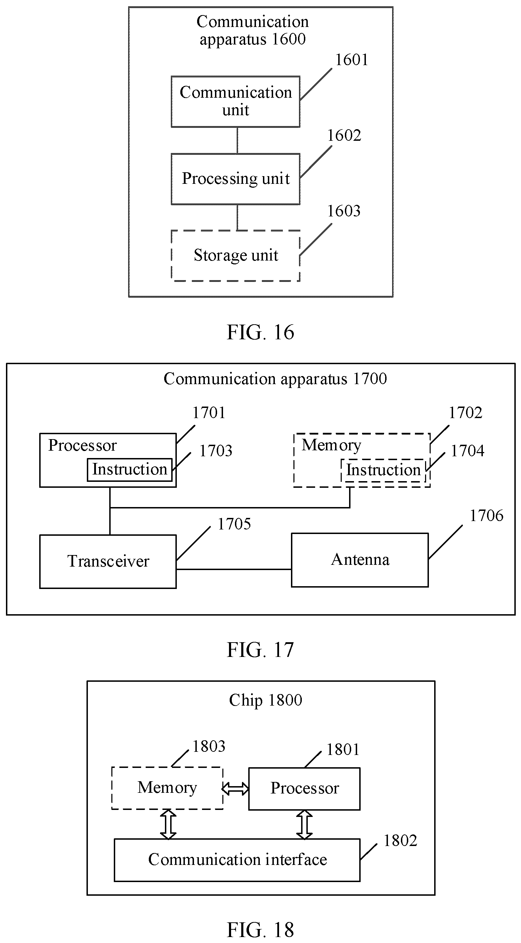

As shown in FIG. 16, an embodiment of this application provides a communication apparatus 1600. The communication apparatus 1600 may be a component (for example, an integrated circuit or a chip) of a network device, or may be a component (for example, an integrated circuit or a chip) of a terminal device. Alternatively, the communication apparatus 1600 may be another communication unit, configured to implement the method in method embodiments of this application. The communication apparatus 1600 may include a communication unit 1601 and a processing unit 1602. The processing unit 1602 is configured to control the communication unit 1601 to perform data/signaling receiving and sending. Optionally, the communication apparatus 1600 may further include a storage unit 1603.

In a possible design, the communication unit 1601 is configured to receive first information from a network device. The processing unit 1602 is configured to determine a plurality of candidate resources based on the first information. The processing unit 1602 is further configured to determine a target resource from the plurality of candidate resources based on a first data amount of to-be-sent data. The communication unit 1601 is further configured to send a part or all of the to-be-sent data to the network device on the target resource. The communication unit 1601 is further configured to send second information to the network device, where the second information indicates the target resource.

In an optional implementation, the plurality of candidate resources are frequency domain resources, time domain resources, or time-frequency domain resources.

In an optional implementation, at least two of the plurality of candidate resources overlap.

In an optional implementation, a proportion of an overlapping part between the at least two candidate resources in one of the at least two candidate resources is greater than a first threshold.

In an optional implementation, the plurality of candidate resources do not overlap each other.

In an optional implementation, the plurality of candidate resources are frequency domain resources or time-frequency domain resources; and the communication unit 1601 sends the second information to the network device, and is specifically configured to send a DMRS to the network device, where the second information is carried in a frequency domain position of the DMRS.

In an optional implementation, the second information is carried in UCI.

In an optional implementation, the second information indicates an index of the target resource; or the second information indicates a proportion of the target resource in the plurality of candidate resources.

In another possible design, the communication unit 1601 is configured to send first information to a terminal device, where the first information is used to determine a plurality of candidate resource. The communication unit 1601 is further configured to receive second information from the terminal device, where the second information indicates a target resource, and the target resource belongs to the plurality of candidate resources. The communication unit 1601 is further configured to receive data from the terminal device on the target resource.

In an optional implementation, the plurality of candidate resources are frequency domain resources, time domain resources, or time-frequency domain resources.

In an optional implementation, at least two of the plurality of candidate resources overlap.

In an optional implementation, a proportion of an overlapping part between the at least two candidate resources in one of the at least two candidate resources is greater than a first threshold.

In an optional implementation, a plurality of candidate resources do not overlap each other.

In an optional implementation, the plurality of candidate resources are frequency domain resources or time-frequency domain resources; and the communication unit 1601 receives the second information from the terminal device, and is specifically configured to receive a DMRS from the terminal device, where the second information is carried in a frequency domain position of the DMRS.

In an optional implementation, the second information is carried in UCI.

In an optional implementation, the second information indicates an index of the target resource; or the second information indicates a proportion of the target resource in the plurality of candidate resources.

This embodiment of this application and the foregoing method embodiments are based on a same concept, and bring same technical effects. For a specific principle, refer to the descriptions of the foregoing embodiments. Details are not described again.

An embodiment of this application further provides a communication apparatus 1700, as shown in FIG. 17. The communication apparatus 1700 may be a network device or a terminal device, may be a chip, a chip system, a processor, or the like that supports a network device in implementing the foregoing methods, or may be a chip, a chip system, a processor, or the like that supports a terminal device in implementing the foregoing methods. The apparatus may be configured to implement the methods described in the foregoing method embodiments. For details, refer to the descriptions in the foregoing method embodiments.

The communication apparatus 1700 may include one or more processors 1701. The processor may be configured to implement some or all functions of the network device or the terminal device through a logic circuit or by running a computer program. The processor 1701 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1700 may include one or more memories 1702. The memory may store instructions 1704. The instructions may be run on the processor 1701, to enable the communication apparatus 1700 to perform the method described in the foregoing method embodiments. Optionally, the memory 1702 may further store data. The processor 1701 and the memory 1702 may be separately disposed, or may be integrated together.

The memory 1702 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a portable read-only memory (compact disc read-only memory, CD-ROM), or the like.

Optionally, the communication apparatus 1700 may further include a transceiver 1705 and an antenna 1706. The transceiver 1705 may be referred to as a transceiver unit, a transceiver machine, a transceiver circuit, or the like, and is configured to implement a transceiver function. The transceiver 1705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, when the communication apparatus 1700 is a terminal device, the transceiver 1705 is configured to receive first information from a network device. The processor 1701 is configured to determine a plurality of candidate resources based on the first information. The processor 1701 is further configured to determine a target resource from the plurality of candidate resources based on a first data amount of to-be-sent data. The transceiver 1705 is further configured to send a part or all of the to-be-sent data to the network device on the target resource. The transceiver 1705 is further configured to send second information to the network device, where the second information indicates the target resource.

In an optional implementation, the plurality of candidate resources are frequency domain resources, time domain resources, or time-frequency domain resources.

In an optional implementation, at least two of the plurality of candidate resources overlap.

In an optional implementation, a proportion of an overlapping part between the at least two candidate resources in one of the at least two candidate resources is greater than a first threshold.

In an optional implementation, a plurality of candidate resources do not overlap each other.

In an optional implementation, the plurality of candidate resources are frequency domain resources or time-frequency domain resources; and the transceiver 1705 sends the second information to the network device, and is specifically configured to send a DMRS to the network device, where the second information is carried in a frequency domain position of the DMRS.

In an optional implementation, the second information is carried in UCI.

In an optional implementation, the second information indicates an index of the target resource; or the second information indicates a proportion of the target resource in the plurality of candidate resources.

In another possible design, when the communication apparatus 1700 is a network device, the transceiver 1705 is configured to send first information to the terminal device, where the first information is used to determine a plurality of candidate resources. The transceiver 1705 is further configured to receive second information from the terminal device, where the second information indicates a target resource, and the target resource belongs to the plurality of candidate resources. The transceiver 1705 is further configured to receive data from the terminal device on the target resource.

In an optional implementation, the plurality of candidate resources are frequency domain resources, time domain resources, or time-frequency domain resources.

In an optional implementation, at least two of the plurality of candidate resources overlap.

In an optional implementation, a proportion of an overlapping part between the at least two candidate resources in one of the at least two candidate resources is greater than a first threshold.

In an optional implementation, the plurality of candidate resources do not overlap each other.

In an optional implementation, the plurality of candidate resources are frequency domain resources or time-frequency domain resources; and the transceiver 1705 receives the second information from the terminal device, and is specifically configured to receive a DMRS from the terminal device, where the second information is carried in a frequency domain position of the DMRS.

In an optional implementation, the second information is carried in UCI.

In an optional implementation, the second information indicates an index of the target resource; or the second information indicates a proportion of the target resource in the plurality of candidate resources.

In another possible design, the processor 1701 may include a transceiver configured to implement receiving and sending functions. For example, the transceiver may be a transceiver circuit, a communication interface, or an interface circuit. The transceiver circuit, the communication interface, or the interface circuit configured to implement the receiving and sending functions may be separated, or may be integrated together. The transceiver circuit, the communication interface, or the interface circuit may be configured to read and write code/data. Alternatively, the transceiver circuit, the communication interface, or the interface circuit may be configured to transmit or transfer a signal.

In still another possible design, optionally, the processor 1701 may store instructions 1703. The instructions 1703 are run on the processor 1701, so that the communication apparatus 1700 performs the method described in the foregoing method embodiments. The instructions 1703 may be fixed in the processor 1701. In this case, the processor 1701 may be implemented by hardware.

In yet another possible design, the communication apparatus 1700 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be a network device or a terminal device. However, a scope of the communication apparatus described in embodiments of this application is not limited thereto, and a structure of the communication apparatus may not be limited by FIG. 17. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and instructions;
(3) an ASIC, like a modem (modulator);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or (6) others.

For a case in which the communication apparatus may be a chip or a chip system, refer to a diagram of a structure of a chip shown in FIG. 18. The chip 1800 shown in FIG. 18 includes a processor 1801 and a communication interface 1802. There may be one or more processors 1801, and there may be a plurality of communication interfaces 1802. The processor 1801 may be a logic circuit, and the communication interface 1802 may be an input/output interface, an input interface, or an output interface. The chip 1800 may further include a memory 1803.

In a design, when the chip is configured to implement a function of the terminal device in embodiments of this application:

The communication interface 1802 is configured to receive first information from a network device. The processor 1801 is configured to determine a plurality of candidate resources based on the first information. The processor 1801 is further configured to determine a target resource from the plurality of candidate resources based on a first data amount of to-be-sent data. The communication interface 1802 is further configured to send a part or all of the to-be-sent data to the network device on the target resource. The communication interface 1802 is further configured to send second information to the network device, where the second information indicates the target resource.

In another design, when the chip is configured to implement a function of the network device in embodiments of this application:

The communication interface 1802 is configured to send first information to a terminal device, where the first information is used to determine a plurality of candidate resources. The communication interface 1802 is further configured to receive second information from the terminal device, where the second information indicates a target resource, and the target resource belongs to the plurality of candidate resources. The communication interface 1802 is further configured to receive data from the terminal device on the target resource.

In embodiments of this application, the communication apparatus 1700 and the chip 1800 may further perform implementations of the communication apparatus 1600. A person skilled in the art may further understand that various illustrative logical blocks (illustrative logical blocks) and steps (steps) that are listed in embodiments of this application may be implemented by electronic hardware, computer software, or a combination thereof. Whether the functions are implemented by hardware or software depends on particular applications and a design requirement of the entire system. A person skilled in the art may use various methods to implement the described functions for each particular application, but it should not be considered that the implementation goes beyond the protection scope of embodiments of this application.

This embodiment of this application and the foregoing data transmission method are based on a same concept, and bring same technical effect. For a specific principle, refer to the descriptions in the foregoing data transmission method. Details are not described again.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by hardware or software depends on particular applications and a design requirement of the entire system. A person skilled in the art may use various methods to implement the described functions for each particular application, but it should not be considered that the implementation goes beyond the protection scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes at least one network device and at least one terminal device in the foregoing aspects. In another possible design, the system may further include another device that interacts with the network device and the terminal device in the solutions provided in this application.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of means" two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between associated objects. In a formula in this application, the character "/" indicates a "division" relationship between associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data transmission method, wherein the method comprises:

    receiving first information from a network device;
    determining a plurality of candidate resources based on the first information;
    determining a target resource from the plurality of candidate resources based on a first data amount of to-be-sent data;
    sending a part or all of the to-be-sent data to the network device on the target resource; and
    sending second information to the network device, wherein the second information indicates the target resource.

2. The method according to claim 1, wherein the plurality of candidate resources are frequency domain resources, time domain resources, or time-frequency domain resources.

3. The method according to claim 1 or 2, wherein at least two of the plurality of candidate resources overlap.

4. The method according to claim 3, wherein a proportion of an overlapping part between the at least two candidate resources in one of the at least two candidate resources is greater than a first threshold.

5. The method according to claim 1 or 2, wherein the plurality of candidate resources do not overlap each other.

6. The method according to any one of claims 1 to 5, wherein the plurality of candidate resources are frequency domain resources or time-frequency domain resources; and the sending second information to the network device comprises: sending a demodulation reference signal DMRS to the network device, wherein the second information is carried in a frequency domain position of the DMRS.

7. The method according to any one of claims 1 to 5, wherein the second information is carried in uplink control information UCI.

8. The method according to claim 7, wherein

the second information indicates an index of the target resource; or
the second information indicates a proportion of the target resource in the plurality of candidate resources.

9. A data transmission method, wherein the method comprises:

sending first information to a terminal device, wherein the first information is used to determine a plurality of candidate resources;
receiving second information from the terminal device, wherein the second information indicates a target resource, and the target resource belongs to the plurality of candidate resources; and
receiving data from the terminal device on the target resource.

10. The method according to claim 9, wherein the plurality of candidate resources are frequency domain resources, time domain resources, or time-frequency domain resources.

11. The method according to claim 9 or 10, wherein at least two of the plurality of candidate resources overlap.

12. The method according to claim 11, wherein a proportion of an overlapping part between the at least two candidate resources in one of the at least two candidate resources is greater than a first threshold.

13. The method according to claim 9 or 10, wherein the plurality of candidate resources do not overlap each other.

14. The method according to any one of claims 9 to 13, wherein the plurality of candidate resources are frequency domain resources or time-frequency domain resources; and the receiving second information from the terminal device comprises:
receiving a demodulation reference signal DMRS from the terminal device, wherein the second information is carried in a frequency domain position of the DMRS.

15. The method according to any one of claims 9 to 13, wherein the second information is carried in uplink control information UCI.

16. The method according to claim 15, wherein

the second information indicates an index of the target resource; or
the second information indicates a proportion of the target resource in the plurality of candidate resources.

17. A communication apparatus, wherein the apparatus comprises a module or a unit configured to implement the method according to any one of claims 1 to 8.

18. A communication apparatus, wherein the apparatus comprises a module or a unit configured to implement the method according to any one of claims 9 to 16.

19. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8.

20. A communication apparatus, comprising a processor, wherein the processor is coupled to a memory, the memory is configured to store a program or instructions, and when the program or the instructions are executed by the processor, the apparatus is enabled to perform the method according to any one of claims 9 to 16.

21. A computer-readable storage medium, wherein the computer-readable storage medium stores a computer program, and when the computer program is run, the method according to any one of claims 1 to 8 or the method according to any one of claims 9 to 16 is implemented.

22. A computer program product, wherein the computer program product comprises computer program code, and when the computer program code is run, the method according to any one of claims 1 to 8 or the method according to any one of claims 9 to 16 is implemented.

23. A communication system, comprising the apparatus according to claim 17 and the apparatus according to claim 18, or comprising the apparatus according to claim 19 and the apparatus according to claim 20.

Uplink

Downlink

Terminal device #1

Uplink

Downlink

Terminal device #2

Network device

FIG. 1

Video/Audio

Tactile sensation

3: Sensing data such as position, action, and tactile sensation and instruction

Channel

1: Video/Audio

2: Tactile sensation

Sensing data such as position, action, and tactile sensation and instruction

Master device

Execution feedback data: force and position

4: Execution feedback data: force and position

Slave device

FIG. 2

Terminal
device

Network
device

Is
there any data to
be sent?

Yes

Can
an SR be sent?

Yes

SR/PUCCH

UL Grant/PDCCH

PUSCH

SR: Scheduling request
PUCCH: Physical uplink control channel
UL Grant: Uplink grant
PDCCH: Physical downlink control channel
PUSCH: Physical uplink shared channel

FIG. 3

Logical
channel x

Logical
channel y

FIG. 4

Data
arrives

Receive no
uplink grant,
and transmit the
SR again

Transmit a
scheduling
request SR

Receive
the uplink
grant

Transmit
data

Slot #1

Slot #2

Slot #3

Slot #4

$t_1$

Time

FIG. 5

EP 4 580 285 A1

29

RRC: Radio resource control
CG: Configured grant
PUSCH: Physical uplink shared channel

FIG. 6

RRC: Radio resource control
CG: Configured grant
DCI: Downlink control information
PUSCH: Physical uplink shared channel

FIG. 7

Configured
grant CG
resource

CG resource

Time

A large amount of
data arrives in a
centralized manner

FIG. 8

Network
device

Terminal
device

S101: The network device sends first
information to the terminal device, where
the first information is used to determine a
plurality of candidate resources

S102: The terminal device
determines the plurality of
candidate resources based on
the first information

S103: The terminal device
determines a target resource
from the plurality of candidate
resources based on a first data
amount of to-be-sent data

S104: The terminal device sends second
information to the network device, where
the second information indicates the target
resource

S105: The terminal device sends a part or all
of the to-be-sent data to the network device
on the target resource

FIG. 9

To-be-sent data
arrives at a
terminal device

| D | D | D | S | U | D | D | D | S | U | D | D | D | S | U | D | D | D | S | U |

$t_1$

Slot #1          Slot #2          Slot #3          Time

FIG. 10

Candidate resource #1

Candidate resource #2

Candidate resource #3

Candidate resource #4

FIG. 11

Candidate resource #1

Candidate resource #2

Candidate resource #3

Candidate resource #4

FIG. 12

Candidate
resource #1

Candidate
resource #2

Candidate
resource #3

Candidate
resource #4

FIG. 13

| Candidate resource #1 | Candidate resource #2 | Candidate resource #3 | Candidate resource #4 |
|---|---|---|---|

FIG. 14

Candidate
resource #1A

Candidate
resource #1B

Candidate
resource #2A

Candidate
resource #2B

Candidate
resource #3A

Candidate
resource #3B

Candidate
resource #4A

Candidate
resource #4B

FIG. 15

Communication
apparatus 1600

Communication
unit — 1601

Processing unit — 1602

Storage unit — 1603

FIG. 16

Communication apparatus 1700

Processor — 1701

Instruction — 1703

Memory — 1702

Instruction — 1704

Transceiver — 1705

Antenna — 1706

FIG. 17

Chip 1800

Memory — 1803

Processor — 1801

Communication interface — 1802

FIG. 18

## INTERNATIONAL SEARCH REPORT

| International application No. |
| --- |
| **PCT/CN2023/121234** |

**A.    CLASSIFICATION OF SUBJECT MATTER**

H04W 72/0446(2023.01)i

According to International Patent Classification (IPC) or to both national classification and IPC

**B.    FIELDS SEARCHED**

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

CNTXT, WPABS, ENTXTC, CNKI, 3GPP: 候选, 资源, 数据, 量, 大小, 目标, 指示, 重叠, 阈值, 时域, 频域, 解调参考信号, 索引, candidate, resource, data, amount, volume, size, target, indicate, overlap, threshold, time, frequency, domain, demodulation, reference, signal, DMRS, index

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112399579 A (HUAWEI TECHNOLOGIES CO., LTD.) 23 February 2021 (2021-02-23) description, paragraphs 84-258 | 1-23 |
| A | CN 108737040 A (HUAWEI TECHNOLOGIES CO., LTD.) 02 November 2018 (2018-11-02) entire document | 1-23 |
| A | CN 109274472 A (HUAWEI TECHNOLOGIES CO., LTD.) 25 January 2019 (2019-01-25) entire document | 1-23 |
| A | CN 113596999 A (HUAWEI TECHNOLOGIES CO., LTD.) 02 November 2021 (2021-11-02) entire document | 1-23 |
| A | WO 2022067726 A1 (HUAWEI TECHNOLOGIES CO., LTD.) 07 April 2022 (2022-04-07) entire document | 1-23 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 December 2023** | **18 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121234**

| Patent document cited in search report | | | Publication date (day/month/year) | Patent family member(s) | | | Publication date (day/month/year) |
|---|---|---|---|---|---|---|---|
| CN | 112399579 | A | 23 February 2021 | None | | | |
| CN | 108737040 | A | 02 November 2018 | WO | 2018188620 | A1 | 18 October 2018 |
| CN | 109274472 | A | 25 January 2019 | EP | 3522644 | A1 | 07 August 2019 |
| | | | | EP | 3522644 | A4 | 15 April 2020 |
| | | | | US | 2019288816 | A1 | 19 September 2019 |
| | | | | US | 10938531 | B2 | 02 March 2021 |
| CN | 113596999 | A | 02 November 2021 | None | | | |
| WO | 2022067726 | A1 | 07 April 2022 | WO | 2022068177 | A1 | 07 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211354633